(19) Europäisches Patentamt / European Patent Office / Office européen des brevets

(11) **EP 3 188 127 B1**

(12) **EUROPEAN PATENT SPECIFICATION**

(45) Date of publication and mention
of the grant of the patent:
**25.03.2020 Bulletin 2020/13**

(51) Int Cl.:
*G06T 7/11* *(2017.01)*     *G06T 7/12* *(2017.01)*
*G06T 7/136* *(2017.01)*     *G06T 7/149* *(2017.01)*

(21) Application number: **15202865.0**

(22) Date of filing: **29.12.2015**

(54) **METHOD AND SYSTEM FOR PERFORMING BONE MULTI-SEGMENTATION IN IMAGING DATA**

VERFAHREN UND SYSTEM ZUR DURCHFÜHRUNG VON KNOCHENMEHRFACHSEGMENTIERUNG IN BILDDATEN

PROCÉDÉ ET SYSTÈME PERMETTANT D'EFFECTUER UNE MULTI-SEGMENTATION D'OS DANS DES DONNÉES D'IMAGERIE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**05.07.2017 Bulletin 2017/27**

(73) Proprietor: **Laboratoires Bodycad Inc.**
**Québec, QC G1N 4R7 (CA)**

(72) Inventors:
• **RIVET-SABOURIN, Geoffroy**
  **Stoneham (Québec), G3C 1Z5 (CA)**
• **RANDRIANARISOA, Vénérée Rakotomalala**
  **Québec (Québec), G1W 4G7 (CA)**

(74) Representative: **Cabinet Beau de Loménie**
**158, rue de l'Université**
**75340 Paris Cedex 07 (FR)**

(56) References cited:
**US-A1- 2008 317 308**    **US-A1- 2014 086 465**

• **MESEJO PABLO ET AL: "Biomedical image segmentation using geometric deformable models and metaheuristics", COMPUTERIZED MEDICAL IMAGING AND GRAPHICS, vol. 43, July 2015 (2015-07), pages 167-178, XP029244398, ISSN: 0895-6111, DOI: 10.1016/J.COMPMEDIMAG.2013.12.005**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

**TECHNICAL FIELD OF THE INVENTION**

The present invention relates to the field of bone structure imaging for skeletal modelling. More particularly, it relates to a method for performing multi-bone segmentation in closely matching joints of a patient, as part of a bone imaging process.

**BACKGROUND**

There are several advantages that may occur from patient-specific orthopedic implants and surgeries including exact sizing of the implant according to the anatomy, such as reducing operating time, improving performance, etc.

When designing and conceiving patient-specific orthopedic implants and planning surgeries, including alignment guides, all relevant components of an anatomical structure, e.g. an articulation, are to be modeled and segmented with high precision. Precise modelling and segmentation in turn ensures that the resulting prostheses and alignment guides accurately fit the unique shape and size of the anatomical structure. Furthermore, segmentation of bones from 3D images is important to many clinical applications such as visualization, enhancement, disease diagnosis, implant design, cutting guide design, and surgical planning.

In the field of bone imaging, many imaging techniques and methods are known in the art in order to produce a skeletal model, such as a 3D skeletal model, of at least a portion of a body structure of a patient, such as a bone or series of bones on/between which an orthopedic implant is to be implanted.

For example and without being limitative, common imaging techniques, including magnetic resonance imaging (MRI), computed axial tomography (CAT scan), ultrasound, or the like are combined with three-dimensional image reconstruction tools, such as CAD software or the like, for the three-dimensional image reconstruction. In the case of bones with well-defined joints, known imaging techniques and three-dimensional image reconstruction tools are usually able to produce satisfactory models.

However, in the case of small and/or multiple adjacent bones such as, for example, bones of the hands and foot, where the distance between the bones is relatively small, thereby forming closely matching joints therebetween, and larger bones with outer edges closely matching one another, thereby also defining closely matching joints, such as hip bones or the like, known imaging techniques and three-dimensional image reconstruction tools often prove inadequate to perform the required individual multi-bone segmentation, i.e. the partitioning of a digital image into multiple segments in order to provide data that can be used for generating the three-dimensional image which clearly define the shape of each bone of the joints and is therefore more meaningful or easier to analyze. In fact, the failure of those well-known imaging techniques to segment these images is due to the challenging nature of the acquired images. For example, in CT imagery, when the boundaries of two bones are too close to each other, as described earlier, they tend to be diffused, which lower the contrast of the boundaries of the neighboring bones with respect to the background. Moreover, the bone structures have inhomogeneous intensities which involve an overlap between the distributions of the intensities within the regions.

Mesejo et al. (2015) describes a hybrid level set approach for medical image segmentation in which a geometric deformable model combines region- and edge-based information with the prior shape knowledge introduced using registration. It consists of two phases: training and test. It implies the learning of the level set parameters by means of a Genetic Algorithm (Mesejo et al, Biomedical image segmentation using geometric deformable models and metaheuristics, Computerized medical imaging and graphics, vol. 43, july 2015, pp. 167-178).

US patent application no. 2014/086465 to Wu Dijia et al. describes a multiple object segmentation for three-dimensional computed tomography wherein adjacent objects are individually segmented and overlapping regions or location designated as belonging to two objects may be identified.

US patent application no. 2008/317308 to Wu Xiadong et al. describes a system and methods for segmentation of globally optimal surfaces representing object boundaries in volumetric datasets. The system and methods are capable of detecting multiple interacting surfaces in which the optimality is controlled by cost functions designed for individual surfaces and by several geometric constraints defining the surface smoothness and interrelations.

In view of the above, there is a need for an improved method and system for performing bone segmentation which would be able to overcome or at least minimize some of the above-discussed prior art concerns.

**BRIEF SUMMARY OF THE INVENTION**

The invention is defined in independent claims 1 and 17.

According to a general aspect, there is provided a computer implemented method for performing bone segmentation in imaging data of a section of a body structure. The method comprises:

Obtaining the imaging data including a plurality of 2D images of the section of the body structure; and

Performing a multiphase local-based hybrid level set segmentation on at least a subset of the plurality of 2D images by minimizing an energy functional including a local-based edge term and a local-based region term computed locally inside a local neighborhood centered at each pixel of each one of the 2D images on which the multiphase local-based hybrid level set segmentation is performed, the local neighborhood being defined by a Gaussian kernel whose size is determined by a scale parameter ($\sigma$).

The minimization of the energy functional generates segmented blobs delimitating the regions of the 2D images, each one of the blobs substantially contouring one or more bones contained in the respective one of the 2D images. For instance, the segmented blobs are used to discriminate the background of the 2D images from the region(s) corresponding to the bones. The segmented blobs in each of the 2D images can be stacked to generate a plurality of 3D subvolumes, each one of the 3D subvolumes resulting from the combination of a plurality of corresponding segmented blobs. Each one of the 3D subvolumes corresponds to one or more bones. The plurality of 3D subvolumes can be combined to generate a 3D volume including a plurality of bones of the section of the body structure. The 3D volume is thus a 3D model of the bones of the section of the body structure.

In an embodiment, the local neighborhood is circular and performing the multiphase local-based hybrid level set segmentation further comprises: for each pixel of the 2D images, dynamically changing region descriptors based on a position of a center of the local neighborhood.

In an embodiment, the computer implemented method further comprises: selecting a value of $\lambda$ to adjust a performance of the multiphase local-based hybrid level set segmentation with $\lambda$ being greater than 0 and smaller than 1, wherein $\lambda$ multiplies the local-based edge term and $(1-\lambda)$ multiplies local-based region term.

In an embodiment, the computer implemented method further comprises: initializing the multiphase local-based hybrid level set segmentation with a contour obtained from a 3D adaptive thresholding, the contour being close to boundaries of the bones to be segmented.

In an embodiment, the 2D images include two phases and the energy functional is:

$$\mathcal{F}_{2\text{-}phase}(\phi, c, b) = (1 - \lambda)\mathcal{E}_{region}(\phi, c, b) + \lambda\mathcal{E}_{edge}(\phi) + \mu\mathcal{R}_{p}(\phi)$$

where $\lambda$ is greater than or equal to 0 and smaller than or equal to 1, $\mu$ is a positive constant, $b$ is a bias field accounting for intensity inhomogeneity, and $c$ is a vector representing intensity-based constant values in disjoint regions,

$$\mathcal{E}_{edge}(\phi) = v\mathcal{L}_{g}(\phi) + \alpha\mathcal{A}_{g}(\phi) \quad (4)$$

wherein $v$ and $\alpha$ are normalization constants,

$$\mathcal{L}_{g}(\phi) \triangleq \int g_{\sigma,\tau}\, \delta_{\varepsilon}(\phi)|\nabla\phi|\, d\mathbf{x} \quad ,$$

$$\mathcal{A}_{g}(\phi) \triangleq \int g_{\sigma,\tau}\, \mathcal{H}_{\varepsilon}(-\phi)\, d\mathbf{x} \quad ,$$

$$g_{\sigma,\tau} \triangleq \frac{1}{1+f_{\sigma,\tau}} \quad ,$$

$$f_{\sigma,\tau}(\mathbf{x}) = \int K_{\sigma}(\mathbf{y} - \mathbf{x})u_{\tau}(\mathbf{y})\, d\mathbf{y} \quad ,$$

$$u_{\tau} \triangleq |\nabla G_{\tau} * I|^{2}$$

with $G_\tau$ being a Gaussian kernel with a standard definition $\tau$ and $I$ being the image,

$K_\sigma$, a kernel function computed by means of a truncated Gaussian function of the scale parameter ($\sigma$), $\rho$ being the radius of the local circular neighborhood:

$$K_\sigma(u) = \begin{cases} \dfrac{1}{a} e^{-|u|^2/2\sigma^2}, & |u| \le \rho \\ 0, & otherwise \end{cases}$$

and

$$H_\varepsilon(\phi) = \frac{1}{2}\left[1 + \frac{2}{\pi}\arctan\left(\frac{\phi}{\varepsilon}\right)\right]$$

with $\varepsilon$ being a parameter; and

$$E_{region}(\phi, c, b) = \int \left(\sum_{i=1}^{N}(\int K_\sigma(y - x)|I(x) - b(y)c_i|^2 dy)M_i(\phi(x))dx\right)$$

$M_i$ is a membership function of each region $\Omega_i$, and is defined as:

$$M_1(\phi) = H_\varepsilon(\phi)$$

$$M_2(\phi) = 1 - H_\varepsilon(\phi)$$

wherein $R_p$ is a regularisation term:

$$R_p(\phi) = \int p(|\nabla\phi|)dx$$

and the minimization of the hybrid energy functional $F$ is carried out by gradient descent method:

$$\frac{\partial \phi}{\partial t} = -\frac{\partial F_{2\_phase}}{\partial \phi}$$

In another embodiment, the energy functional is:

$$F_{multiphase}(\Phi, c, b) = (1 - \lambda)E_{region}(\Phi, c, b) + \lambda E_{edge}(\Phi) + \mu R_p(\Phi)$$

where $\lambda$ is greater than or equal to 0 and smaller than or equal to 1, $\mu$ is a positive constant, b is a bias field accounting for intensity inhomogeneity, c is a vector representing intensity-based constant values in disjoint regions, and $\Phi$ is a vector formed by k level set functions $\Phi$i, i=1...k for k regions or phases;

$$\Phi = (\phi_1(y), ..., \phi_k(y))$$

and a number of the level set functions to be used is at least equal to:

$$\check{k} = log_2(\mathcal{N})$$

where $log_2$ is the logarithm to the base 2 and N is the number of the regions to be segmented in the image.

$$\mathcal{E}_{region}(\Phi, c, b) = \int \sum_{i=1}^{N} e_i(\mathbf{x}) M_i(\Phi) \mathbf{x})) d\mathbf{x}$$

With:

$$e_i(\mathbf{x}) = \int K_\sigma |I(\mathbf{x}) - b(\mathbf{y}) c_i|^2 \, d\mathbf{y}, \quad i=1,\dots,k$$

with $K_\sigma$, a kernel function computed by means of a truncated Gaussian function of standard deviation $\sigma$, referred to as the scale parameter,

$\mathcal{M}_i$ is a membership function of each region $\Omega_i$, and is defined as:

$$M_i(\Phi) = M_i(\phi_1(\mathbf{y}),\dots,\phi_k(\mathbf{y})) = \begin{cases} 1, & \mathbf{y} \in \Omega_i \\ 0, & else \end{cases}$$

$$\mathcal{E}_{edge}(\Phi) = v\mathcal{L}_g(\Phi) + \alpha\mathcal{A}_g(\Phi)$$

Where:

$$\mathcal{L}_g(\Phi) = \sum_{j=1}^{k} \mathcal{L}_g(\phi_j)$$

$$\mathcal{A}_g(\Phi) = \sum_{j=1}^{k} \mathcal{A}_g(\phi_j)$$

wherein $v$ and $\alpha$ are normalization constants, wherein $\mathcal{R}_p$ is a regularisation term:

$$\mathcal{R}_p(\phi) = \int p(|\nabla\phi|) dx$$

and the minimization of the multiphase hybrid energy functional $\mathcal{F}_{multiphase}$ by gradient descent method:

$$\frac{\partial\phi_1}{\partial t} = -\frac{\partial F_{multiphase}(\Phi)}{\partial\phi_1}, \dots, \quad \frac{\partial\phi_2}{\partial t} = -\frac{\partial F_{multiphase}(\Phi)}{\partial\phi_k}.$$

In an embodiment, the computer implemented method further comprises: identifying regions of interest (ROIs) on at least the subset of the plurality of 2D images of the section of the body structure; and performing the multiphase local-based hybrid level set segmentation on the regions of interest (ROIs).

According to another general aspect, there is provided a computer implemented method for performing bone segmentation in imaging data of at least a section of a body structure including a plurality of bones using anatomical knowledge data relative to the section of the body structure of the imaging data, the method comprising:

Obtaining the imaging data including a plurality of 2D images of the section of the body structure;
Generating primary image data from the imaging data using an image preprocessing including identifying regions of interest (ROIs) in the 2D images;
Generating secondary segmented image data including a plurality of 2D binary images with segmented blobs by performing a multiphase local-based hybrid level set segmentation on the regions of interest (ROIs) by minimizing an energy functional including a local-based edge term and a local-based region term computed locally inside a local neighborhood centered at each point of a respective one of the regions of interest (ROIs), the local neighborhood being defined by a Gaussian kernel;

Generating a 3D volume including a plurality of 3D subvolumes from the segmented blobs of the secondary segmented image data; and

Associating an anatomical component to each one of the 3D subvolumes using the anatomical knowledge data relative to the section of the body structure of the imaging data.

In an embodiment, the image preprocessing further comprises performing a 3D adaptive thresholding processing to define thresholded blobs in the 2D images and generating binary masks from the thresholded blobs obtained by the 3D adaptive thresholding processing. The plurality of 2D images are greyscale images and the 3D adaptive thresholding processing can include the steps of :

For at least a sample of the plurality of 2D greyscale images:

Dividing each one of the 2D greyscale images of at least the sample in a plurality of sections;

Computing a local pixel intensity section threshold for each one of the sections;

Computing a global image pixel intensity threshold for each one of the 2D greyscale images of at least the sample using the local pixel intensity section thresholds computed for each one of the sections;

Computing a global volume pixel intensity threshold using the global image pixel intensity thresholds; and

Applying the global volume pixel intensity threshold to each one of the 2D greyscale images of the plurality of 2D greyscale images.

The global image pixel intensity threshold for each one of the 2D greyscale images of at least the sample can be computed as a maximum of the local pixel intensity section thresholds for the corresponding image. The global volume pixel intensity threshold from the global image pixel intensity thresholds can be computed as a mean of the global image pixel intensity thresholds minus 1.5 times a standard deviation of the global image pixel intensity thresholds [mean(global image pixel intensity thresholds)-1.5std(global image pixel intensity thresholds)]. The image preprocessing can comprise computing thresholded blobs in the images following the 3D adaptive thresholding processing and creating binary masks from the thresholded blobs. Identifying regions of interest (ROIs) in the 2D images can comprise selecting regions in the 2D greyscale images of the imaging data including at least one of a respective one of the thresholded blobs and a respective one of the binary masks generated from the thresholded blobs.

In an embodiment, generating secondary segmented image data can comprise performing a blob masking validation following the multiphase local-based hybrid level set segmentation, the multiphase local-based hybrid level set segmentation generating a plurality of unmasked blobs, and wherein the blob masking validation comprises:

Applying the binary masks to the unmasked blobs to obtain masked blobs;

Determining at least one perceptual grouping property of each one of the masked blobs and the unmasked blobs;

For each corresponding pair of masked blobs and unmasked blobs,

Comparing the at least one perceptual grouping property of the masked blob to the at least one perceptual grouping property of the corresponding one of unmasked blobs; and

Selecting the one of the masked blob and the corresponding one of unmasked blobs having the highest perceptual grouping property as the segmented blob of the secondary segmented image data.

The computer implemented method can further comprise initializing the multiphase local-based hybrid level set segmentation with the binary masks.

Performing the multiphase local-based hybrid level set segmentation on the regions of interest (ROIs) can comprise generating binary subimages including the segmented blobs and the method can further comprise merging the binary subimages to generate a respective one of the 2D binary images including the segmented blobs.

In an embodiment, generating secondary segmented image data comprises stacking the 2D binary images.

In an embodiment, the image preprocessing further comprises:

Determining an initial image including at least one region of interest and determining a final image including at least one region of interest; and

Selecting a subset of 2D images including the initial image, the final image, and the images extending therebetween, wherein the primary image data consists of the subset of 2D images including the regions of interest (ROIs).

In an embodiment, identifying anatomical components in the 3D volume comprises:

Computing at least one subvolume feature for each one of the 3D subvolumes;

For each one of the 3D subvolumes, carrying out a bone identification processing comprising:

Identifying a closest one of the bones and comparing the at least one subvolume feature to features of the anatomical knowledge data corresponding to the closest one of the bones;

If the at least one subvolume feature for the respective one of the 3D subvolumes substantially corresponds to the features of the anatomical knowledge data for the closest one of the bones, associating the respective one of the 3D subvolumes to the closest one of the bones;

Otherwise, applying a selective 3D bone separation to the respective one of the 3D subvolumes and generating new 3D subvolumes.

Identifying anatomical components in the 3D volume can further comprise:

Identifying a 3D anatomical point of interest within the 3D volume;

Identifying a 3D subvolume closest to the 3D anatomical point of interest; and

Performing sequentially the bone identification processing by proximity to a last one of associated 3D subvolumes, starting from the 3D subvolume closest to the 3D anatomical point of interest.

In an embodiment, the 3D volume generated from the 2D binary images of the secondary segmented image data is a first 3D volume and the method further comprises:

Carrying out a 2D blob separation on the secondary segmented image data and generating a second 3D volume by stacking binary images obtained following the 2D blob separation; and

wherein identifying anatomical components is performed on the second 3D volume.

Carrying out a 2D blob separation can comprise:
For each one of the segmented blobs of the secondary segmented image data:

Creating straight segments from the contours of the respective one of the segmented blobs;

Identifying points of interest using the straight segments;

If there is at least one point of interest, identifying at least one bone attachment location close to the at least one point of interest; and separating the respective one of the segmented blobs by local morphological erosion along the at least one bone attachment location.

Identifying points of interest using the straight segments can comprise:

Determining a length of the straight segments and an angle between consecutive ones of the straight segments, the consecutive one of the straight segments sharing a common point;

For each pair of consecutive straight segments ($s_1$, $s_2$), computing a relevance measure ($K_{relevance}$):

$$K_{relevance} = \frac{\beta(s_1, s_2)l(s_1)l(s_2)}{l(s_1)+l(s_2)}$$

wherein $\beta(s_1, s_2)$ is the angle between the consecutive straight segments $s_1$ and $s_2$;

$l(s_1)$ and $l(s_2)$ are lengths of the consecutive straight segments $s_1$ and $s_2$ respectively;

Comparing the computed relevance measure to a predetermined threshold; and

If the computed relevance measure meets the predetermined relevance threshold, identifying the common point as being a point of interest.

Identifying at least one bone attachment location close to the at least one point of interest can comprise:

Identifying if a respective one of the points of interest belongs to a linear bone attachment location defined by a pair of points of interest; and, for each identified linear bone attachment location, separating the respective one of the segmented blobs comprises performing a linear local morphological erosion along a line extending between the points of interest defining the linear bone attachment location;

otherwise, identifying the respective one of the points of interest as a punctual bone attachment location and separating the respective one of the segmented blobs comprises performing local morphological erosion around the punctual bone attachment location.

Identifying a pair of points of interest can comprise: for each potential pair of points of interest, grouping the points of interest in a pair and computing a distance separating two grouped points of the pair, comparing the computed distance to a predetermined distance threshold; and if the computed distance meets the predetermined distance threshold, associating the potential pair of interest points as being one linear bone attachment location.

In an embodiment, the local neighborhood is circular and performing the multiphase local-based hybrid level set segmentation further comprises: for each pixel of the regions of interest (ROIs), dynamically changing region descriptors based on a position of a center of the local neighborhood.

In an embodiment, the computer implemented method further comprises: selecting a value of $\lambda$ to adjust the performance of the multiphase local-based hybrid level set segmentation with $\lambda$ being greater than 0 and smaller than 1, wherein $\lambda$ multiplies the local-based edge term and $(1-\lambda)$ multiplies local-based region term.

In an embodiment, the regions of interest (ROIs) include two phases and the energy functional is:

$$\mathcal{F}_{2\text{-phase}}(\phi, c, b) = (1 - \lambda)\mathcal{E}_{region}(\phi, c, b) + \lambda\mathcal{E}_{edge}(\phi) + \mu\mathcal{R}_p(\phi)$$

where $\lambda$ is greater than or equal to 0 and smaller than or equal to 1, $\mu$ is a positive constant, $b$ is a bias field accounting for intensity inhomogeneity, and $c$ is a vector representing intensity-based constant values in disjoint regions,

$$\mathcal{E}_{edge}(\phi) = v\mathcal{L}_g(\phi) + \alpha\mathcal{A}_g(\phi) \quad (4)$$

wherein $v$ and $\alpha$ are normalization constants,

$$\mathcal{L}_g(\phi) \triangleq \int g_{\sigma,\tau}\, \delta_\varepsilon(\phi)|\nabla\phi|d\mathbf{x}$$
,

$$\mathcal{A}_g(\phi) \triangleq \int g_{\sigma,\tau}\, \mathcal{H}_\varepsilon(-\phi)d\mathbf{x}$$
,

$$g_{\sigma,\tau} \triangleq \frac{1}{1+f_{\sigma,\tau}},$$

$$f_{\sigma,\tau}(\mathbf{x}) = \int K_\sigma(\mathbf{y}-\mathbf{x})u_\tau(\mathbf{y})d\mathbf{y},$$

$$u_\tau \triangleq |\nabla G_\tau * I|^2$$

with $G_\tau$ being a Gaussian kernel with a standard definition $\tau$ and $I$ being the image,
$K_\sigma$ a kernel function computed by means of a truncated Gaussian function of the scale parameter ($\sigma$), $\rho$ being the radius of the local circular neighborhood:

$$K_\sigma(u) = \begin{cases} \dfrac{1}{a}e^{-|u|^2/2\sigma^2}, & |u| \le \rho \\ 0, & otherwise \end{cases}$$

and

$$H_\varepsilon(\phi) = \frac{1}{2}\left[1 + \frac{2}{\pi}\arctan\left(\frac{\phi}{\varepsilon}\right)\right]$$

with $\varepsilon$ being a parameter; and

$$E_{region}(\phi, c, b) = \int \left(\sum_{i=1}^N (\int K_\sigma(\mathbf{y}-\mathbf{x})|I(\mathbf{x})-b(\mathbf{y})c_i|^2 d\mathbf{y})\mathcal{M}_i(\phi(\mathbf{x}))\right)d\mathbf{x}$$

$\mathcal{M}_i$ is a membership function of each region $\Omega_i$, and is defined as:

$$\mathcal{M}_1(\phi) = \mathcal{H}_\varepsilon(\phi)$$

$$\mathcal{M}_2(\phi) = 1 - \mathcal{H}_\varepsilon(\phi)$$

wherein $\mathcal{R}_p$ is a regularisation term:

$$\mathcal{R}_p(\phi) = \int p(|\nabla\phi|)dx$$

and the minimization of the hybrid energy functional $\mathcal{F}$ is carried out by gradient descent method:

$$\frac{\partial\phi}{\partial t} = -\frac{\partial F_{2\ phase}}{\partial\phi}.$$

In another embodiment, the energy functional is:

$$\mathcal{F}_{multiphase}(\Phi, c, b) = (1 - \lambda)E_{region}(\Phi, c, b) + \lambda E_{edge}(\Phi) + \mu \mathcal{R}_p(\Phi)$$

where $\lambda$ is greater than or equal to 0 and smaller than or equal to 1, $\mu$ is a positive constant, b is a bias field accounting for intensity inhomogeneity, c is a vector representing intensity-based constant values in disjoint regions, and $\Phi$ is a vector formed by k level set functions $\Phi i$, i=1... k for k regions or phases;

$$\Phi = (\phi_1(y), ..., \phi_k(y))$$

and a number of the level set functions to be used is at least equal to:

$$k = log_2(N)$$

where $log_2$ is the logarithm to the base 2 and N is the number of the regions to be segmented in the image.

$$E_{region}(\Phi, c, b) = \int \sum_{i=1}^{N} e_i(x) M_i(\Phi) x)) dx$$

With:

$$e_i(x) = \int K_\sigma |I(x) - b(y)c_i|^2 \, dy, \quad i=1, ..., k$$

with $K_\sigma$, a kernel function computed by means of a truncated Gaussian function of standard deviation $\sigma$, referred to as the scale parameter,

$\mathcal{M}_i$ is a membership function of each region $\Omega_i$, and is defined as:

$$M_i(\Phi) = M_i(\phi_1(y), ..., \phi_k(y)) = \begin{cases} 1, & y \in \Omega_i \\ 0, & else \end{cases}$$

$$E_{edge}(\Phi) = v\mathcal{L}_g(\Phi) + \alpha \mathcal{A}_g(\Phi)$$

Where:

$$\mathcal{L}_g(\Phi) = \sum_{j=1}^{k} \mathcal{L}_g(\phi_j)$$

$$\mathcal{A}_g(\Phi) = \sum_{j=1}^{k} \mathcal{A}_g(\phi_j)$$

wherein $v$ and $\alpha$ are normalization constants,

wherein $\mathcal{R}_p$ is a regularisation term:

$$\mathcal{R}_p(\phi) = \int p(|\nabla \phi|) dx$$

and the minimization of the multiphase hybrid energy functional $\mathcal{F}_{multiphase}$ by gradient descent method:

$$\frac{\partial \phi_1}{\partial t} = -\frac{\partial F_{multiphase}(\Phi)}{\partial \phi_1}, \dots, \qquad \frac{\partial \phi_k}{\partial t} = -\frac{\partial F_{multiphase}(\Phi)}{\partial \phi_k}.$$

According to a general aspect, there is provided a computer implemented method for performing bone segmentation in imaging data of at least a section of a body structure including a plurality of bones using anatomical knowledge data relative to the section of the body structure of the imaging data. The method comprises:

Obtaining the imaging data including a plurality of 2D greyscale images of the section of the body structure;
Generating primary image data from the imaging data using an image preprocessing including:

Performing a 3D adaptive thresholding processing to define thresholded blobs in each of the 2D greyscale images;

Generating binary masks from the thresholded blobs; and

Identifying regions of interest (ROIs) in the 2D greyscale images of the imaging data using the binary masks generated from the thresholded blobs;

Generating secondary segmented image data including a plurality of 2D binary images with segmented blobs by:

Carrying out a segmentation on the regions of interest (ROIs) to obtain a plurality of unmasked blobs;

Applying the binary masks to the unmasked blobs to obtain masked blobs;

Determining at least one perceptual grouping property of each one of the masked blobs and the unmasked blobs;

For each corresponding pair of masked blobs and unmasked blobs,

Comparing the at least one perceptual grouping property of the masked blob to the at least one perceptual grouping property of the corresponding one of the unmasked blobs; and

Selecting the one of the masked blob and the corresponding one of unmasked blobs having the highest perceptual grouping property as the segmented blob of the secondary segmented image data;

Generating a 3D volume including a plurality of 3D subvolumes from the segmented blobs of the secondary segmented image data; and
Associating an anatomical component to each one of the 3D subvolumes using the anatomical knowledge data relative to the section of the body structure of the imaging data.

In an embodiment, the 3D adaptive thresholding processing includes the steps of :
For at least a sample of the plurality of 2D greyscale images:

Dividing each one of the 2D greyscale images of at least the sample in a plurality of sections;

Computing a local pixel intensity section threshold for each one of the sections;

Computing a global image pixel intensity threshold for each one of the 2D greyscale images of at least the sample using the local pixel intensity section thresholds computed for each one of the sections;

Computing a global volume pixel intensity threshold using the global image pixel intensity thresholds; and

Applying the global volume pixel intensity threshold to each one of the 2D greyscale images of the plurality of 2D greyscale images.

The global image pixel intensity threshold for each one of the 2D greyscale images of at least the sample can be computed as a maximum of the local pixel intensity section thresholds for the corresponding image.
The global volume pixel intensity threshold from the global image pixel intensity thresholds can be computed as a mean of the global image pixel intensity thresholds minus 1.5 times a standard deviation of the global image pixel intensity thresholds [mean(global image pixel intensity thresholds)-1.5std(global image pixel intensity thresholds)].

Identifying regions of interest (ROIs) in the 2D greyscale images can comprise selecting regions in the 2D greyscale images of the imaging data including at least one of a respective one of the thresholded blobs and a respective one of the binary masks generated from the thresholded blobs.

The segmentation can be a multiphase local-based hybrid level set segmentation performed by minimizing an energy functional including a local-based edge term and a local-based region term computed locally inside a local neighborhood centered at each point of a respective one of the regions of interest (ROIs), the local neighborhood being defined by a Gaussian kernel and the method further comprises initializing the multiphase local-based hybrid level set segmentation with the binary masks.

In an embodiment, performing the segmentation on the regions of interest (ROIs) comprises generating binary subimages including the segmented blobs and the method further comprises merging the binary subimages to generate a respective one of the 2D binary images including the segmented blobs.

In an embodiment, generating secondary segmented image data comprises stacking the 2D binary images.

In an embodiment, the image preprocessing further comprises:

Determining an initial image including at least one region of interest and determining a final image including at least one region of interest; and

Selecting a subset of 2D images including the initial image, the final image, and the images extending therebetween, wherein the primary image data consists of the subset of 2D images including the regions of interest (ROIs).

In an embodiment, identifying anatomical components in the 3D volume comprises:

Computing at least one subvolume feature for each one of the 3D subvolumes;

For each one of the 3D subvolumes, carrying out a bone identification processing comprising:

Identifying a closest one of the bones and comparing the at least one subvolume feature to features of the anatomical knowledge data corresponding to the closest one of the bones;

If the at least one subvolume feature for the respective one of the 3D subvolumes substantially corresponds to the features of the anatomical knowledge data for the closest one of the bones, associating the respective one of the 3D subvolumes to the closest one of the bones;

Otherwise, applying a selective 3D bone separation to the respective one of the 3D subvolumes and generating new 3D subvolumes.

Identifying anatomical components in the 3D volume can further comprise:

Identifying a 3D anatomical point of interest within the 3D volume;

Identifying a 3D subvolume closest to the 3D anatomical point of interest; and

Performing sequentially the bone identification processing by proximity to a last one of associated 3D subvolumes, starting from the 3D subvolume closest to the 3D anatomical point of interest.

The 3D volume generated from the 2D binary images of the secondary segmented image data can be a first 3D volume and the method can further comprise:

Carrying out a 2D blob separation on the secondary segmented image data and generating a second 3D volume by stacking binary images obtained following the 2D blob separation; and

wherein identifying anatomical components is performed on the second 3D volume.

Carrying out a 2D blob separation can comprise:
For each one of the segmented blobs of the secondary segmented image data:

Creating straight segments from the contours of a respective one of the segmented blobs;

Identifying points of interest using the straight segments;

If there is at least one point of interest, identifying at least one bone attachment location close to the at least one point of interest; and separating the respective one of the segmented blobs by local morphological erosion along the at least one bone attachment location.

Identifying points of interest using the straight segments can comprise:

Determining a length of the straight segments and an angle between consecutive ones of the straight segments, the consecutive one of the straight segments sharing a common point;

For each pair of consecutive straight segments ($s_1$, $s_2$), computing a relevance measure ($K_{relevance}$):

$$K_{relevance} = \frac{\beta(s_1, s_2)l(s_1)l(s_2)}{l(s_1)+l(s_2)}$$

wherein $\beta(s_1, s_2)$ is the angle between the consecutive straight segments $s_1$ and $s_2$;

$l(s_1)$ and $l(s_2)$ are lengths of the consecutive straight segments $s_1$ and $s_2$ respectively;

Comparing the computed relevance measure to a predetermined threshold; and

If the computed relevance measure meets the predetermined relevance threshold, identifying the common point as being a point of interest.

Identifying at least one bone attachment location close to the at least one point of interest can comprise:

Identifying if a respective one of the points of interest belongs to a linear bone attachment location defined by a pair of points of interest; and, for each identified linear bone attachment location, separating the respective one of the segmented blobs comprises performing a linear local morphological erosion along a line extending between the points of interest defining the linear bone attachment location;

otherwise, identifying the respective one of the points of interest as a punctual bone attachment location and separating the respective one of the segmented blobs comprises performing local morphological erosion around the punctual bone attachment location.

Identifying a pair of points of interest can comprise: for each potential pair of points of interest, grouping the points of interest in a pair and computing a distance separating two grouped points of the pair, comparing the computed distance to a predetermined distance threshold; and if the computed distance meets the predetermined distance threshold, associating the potential pair of interest points as being one linear bone attachment location.

In an embodiment, the local neighborhood is circular and performing the multiphase local-based hybrid level set segmentation further comprises: for each pixel of the regions of interest (ROIs), dynamically changing region descriptors based on a position of a center of the local neighborhood.

In an embodiment, the computer implemented method further comprises: selecting a value of $\lambda$ to adjust a performance of the multiphase local-based hybrid level set segmentation with $\lambda$ being greater than 0 and smaller than 1, wherein $\lambda$ multiplies the local-based edge term and (1-$\lambda$) multiplies local-based region term.

In an embodiment, the regions of interest (ROIs) include two phases and the energy functional is:

$$\mathcal{F}_{2\text{-phase}}(\phi, c, b) = (1 - \lambda)\mathcal{E}_{region}(\phi, c, b) + \lambda\mathcal{E}_{edge}(\phi) + \mu\mathcal{R}_p(\phi)$$

where $\lambda$ is greater than or equal to 0 and smaller than or equal to 1, $\mu$ is a positive constant, $b$ is a bias field accounting for intensity inhomogeneity, and $c$ is a vector representing intensity-based constant values in disjoint regions,

$$\mathcal{E}_{edge}(\phi) = v\mathcal{L}_g(\phi) + \alpha\mathcal{A}_g(\phi) \quad (4)$$

wherein $v$ and $\alpha$ are normalization constants,

$$\mathcal{L}_g(\phi) \triangleq \int g_{\sigma,\tau} \, \delta(\phi)|\nabla\phi|d\mathbf{x} \quad ,$$

$$\mathcal{A}_g(\phi) \triangleq \int g_{\sigma,\tau} \, \mathcal{H}(-\phi)d\mathbf{x} \quad ,$$

$$g_{\sigma,\tau} \triangleq \frac{1}{1+f_{\sigma,\tau}} ,$$

$$f_{\sigma,\tau}(\mathbf{x}) = \int K_\sigma(\mathbf{y} - \mathbf{x})u_\tau(\mathbf{y})d\mathbf{y} \quad ,$$

$$u_\tau \triangleq |\nabla G_\tau * I|^2$$

with $G_\tau$ being a Gaussian kernel with a standard definition $\tau$ and $I$ being the image,
$K_\sigma$ a kernel function computed by means of a truncated Gaussian function of the scale parameter ($\sigma$), $\rho$ being the radius of the local circular neighborhood:

$$K_\sigma(u) = \begin{cases} \frac{1}{a}e^{-|u|^2/2\sigma^2}, & |u| \le \rho \\ 0, & otherwise \end{cases}$$

and

$$H_\varepsilon(\phi) = \frac{1}{2}\left[1 + \frac{2}{\pi}\arctan\left(\frac{\phi}{\varepsilon}\right)\right]$$

with $\varepsilon$ being a parameter; and

$$\mathcal{E}_{region}(\phi, c, b) = \int \left(\sum_{i=1}^{N}(\int K_\sigma(\mathbf{y} - \mathbf{x})|I(\mathbf{x}) - b(\mathbf{y})c_i|^2 d\mathbf{y})\mathcal{M}_i(\phi(\mathbf{x}))d\mathbf{x}\right.$$

$\mathcal{M}_i$ is a membership function of each region $\Omega_i$, and is defined as:

$$\mathcal{M}_1(\phi) = \mathcal{H}_\varepsilon(\phi)$$

$$\mathcal{M}_2(\phi) = 1 - \mathcal{H}_\varepsilon(\phi)$$

wherein $\mathcal{R}_p$ is a regularisation term:

$$\mathcal{R}_p(\phi) = \int p(|\nabla\phi|)dx$$

and the minimization of the hybrid energy functional $\mathcal{F}$ is carried out by gradient descent method:

$$\frac{\partial\phi}{\partial t} = -\frac{\partial F_{2\ phase}}{\partial\phi}$$

In another embodiment, the energy functional is:

$$\mathcal{F}_{multiphase}(\Phi, c, b) = (1 - \lambda)\mathcal{E}_{region}(\Phi, c, b) + \lambda\mathcal{E}_{edge}(\Phi) + \mu\mathcal{R}_p(\Phi)$$

where $\lambda$ is greater than or equal to 0 and smaller than or equal to 1, $\mu$ is a positive constant, b is a bias field accounting for intensity inhomogeneity, c is a vector representing intensity-based constant values in disjoint regions, and $\Phi$ is a vector formed by k level set functions $\Phi i$, i=1... k for k regions or phases;

$$\Phi = (\phi_1(y), ..., \phi_k(y))$$

and a number of the level set functions to be used is at least equal to:

$$k = log_2(N)$$

where $log_2$ is the logarithm to the base 2 and N is the number of the regions to be segmented in the image.

$$\mathcal{E}_{region}(\Phi, c, b) = \int \sum_{i=1}^{N} e_i(x)M_i(\Phi)x))dx$$

With:

$$e_i(x) = \int K_\sigma|I(x) - b(y)c_i|^2 \, dy, \quad i=1, ..., k$$

with $K_\sigma$, a kernel function computed by means of a truncated Gaussian function of standard deviation $\sigma$, referred to as the scale parameter,

$\mathcal{M}_i$ is a membership function of each region $\Omega_i$, and is defined as:

$$M_i(\Phi) = M_i(\phi_1(y), ..., \phi_k(y)) = \begin{cases} 1, & y \in \Omega_i \\ 0, & else \end{cases}$$

$$\mathcal{E}_{edge}(\Phi) = v\mathcal{L}_g(\Phi) + \alpha\mathcal{A}_g(\Phi)$$

Where:

$$\mathcal{L}_g(\Phi) = \sum_{j=1}^{k} \mathcal{L}_g(\phi_j)$$

$$\mathcal{A}_g(\ \Phi\ ) = \ \Sigma_{j=1}^k \mathcal{A}_g(\phi_j)$$

wherein $v$ and $\alpha$ are normalization constants,

wherein $\mathcal{R}_p$ is a regularisation term:

$$\mathcal{R}_p(\ \phi) = \int p(|\nabla\phi|)dx$$

and the minimization of the multiphase hybrid energy functional $\mathcal{F}_{multiphase}$ by gradient descent method:

$$\frac{\partial \phi_1}{\partial t} = -\frac{\partial F_{multiphase}(\Phi)}{\partial \phi_1}, ..., \quad \frac{\partial \phi_k}{\partial t} = -\frac{\partial F_{multiphase}(\Phi)}{\partial \phi_k}.$$

According to still another general aspect, there is provided a system for generating segmentation data segmentation from imaging data of at least a section of a body structure including a plurality of bones using anatomical knowledge data relative to the section of the body structure of the imaging data. The system comprises:

a processing unit having a processor and a memory;

an image preprocessing module stored on the memory and executable by the processor, the image preprocessing module having program code that when executed, generates primary image data from the imaging data using an image preprocessing process, the primary image data including regions of interest in images of the imaging data;

a multi-bone segmentation module stored on the memory and executable by the processor, the multi-bone segmentation module having a program code that when executed, generates a 3D volume by performing a multiphase local-based hybrid level set segmentation to obtain a plurality of segmented blobs and combining the segmented blobs to obtain the 3D volume including a plurality of 3D subvolumes, the multiphase local-based hybrid level set segmentation being carried out on each one of on the regions of interest (ROIs) by minimizing an energy functional including a local-based edge term and a local-based region term computed locally inside a local neighborhood centered at each point of a respective one of the regions of interest (ROIs), the local neighborhood being defined by a Gaussian kernel and generating a 3D volume following the multiphase local-based hybrid level set segmentation; and

an anatomical component identification module stored on the memory and executable by the processor, the anatomical component identification module having a program code that, when executed, generates tertiary segmented imaging data through identification of the subvolumes defined in the 3D volume and identification of bones defined by the subvolumes.

In an embodiment, the program code of the anatomical component identification module, when executed, performs further 3D bone separation of at least one of the subvolumes.

According to a further general aspect, there is provided a computer implemented method for 3D adaptive thresholding of a 3D grayscale volume image including a plurality of 2D greyscale images. The method comprises:

Selecting a subset of "N" 2D greyscale images from the plurality of 2D greyscale images, wherein "N" is smaller or equal to a number of images of the plurality of 2D greyscale images;

Dividing each one of the "N" 2D greyscale images in "M" sections;

Computing a set of "M" local pixel intensity thresholds for each one of the "N" 2D greyscale images divided into "M" sections;

Computing a global image pixel intensity threshold for each one of the "N" 2D greyscale images to obtain "N" global image pixel intensity thresholds;

Computing a global volume pixel intensity threshold from the "N" global image pixel intensity thresholds; and

Applying the global volume pixel intensity threshold to threshold each one of the plurality of 2D greyscale images of the 3D grayscale volume image.

In an embodiment, the global image pixel intensity threshold for each one of the "N" 2D greyscale images is computed as a maximum of the "M" local pixel intensity thresholds for the corresponding one of the "N" 2D greyscale images.

In an embodiment, the global volume pixel intensity threshold from the "N" global image pixel intensity thresholds is computed as a mean of the "N" global image pixel intensity thresholds minus 1.5 times a standard deviation of the "N" global image pixel intensity thresholds [mean("N" global image pixel intensity thresholds)-1.5std("N" global image pixel intensity thresholds)].

According to another general aspect, there is provided a computer implemented method for performing bone segmentation in imaging data of at least a section of a body structure including a plurality of bones using anatomical knowledge data relative to the section of the body structure of the imaging data. The method comprises:

Obtaining the imaging data including a plurality of 2D images of the section of the body structure;

Generating primary image data from the imaging data using an image preprocessing including identifying regions of interest (ROIs) in the 2D images;

Generating secondary segmented image data including a plurality of 2D binary images with segmented blobs by performing a segmentation on the regions of interest (ROIs);

Carrying out a 2D blob separation on the secondary segmented image data comprising:
For each one of the segmented blobs of the secondary segmented image data:

Creating straight segments from the contours of the respective one of the segmented blobs;

Identifying points of interest using the straight segments;

If there is at least one point of interest, identifying at least one bone attachment location close to the at least one point of interest; and separating the respective one of the segmented blobs by local morphological erosion along the at least one bone attachment location; and

Stacking binary images obtained following the 2D blob separation to generate a 3D volume including a plurality of 3D subvolumes; and

Associating an anatomical component to each one of the 3D subvolumes using the anatomical knowledge data relative to the section of the body structure of the imaging data.

In an embodiment, identifying points of interest using the straight segments comprises:

Determining a length of the straight segments and an angle between consecutive ones of the straight segments, the consecutive one of the straight segments sharing a common point;

For each pair of consecutive straight segments ($s_1$, $s_2$), computing a relevance measure ($K_{relevance}$):

$$K_{relevance} = \frac{\beta(s_1, s_2)l(s_1)l(s_2)}{l(s_1)+l(s_2)}$$

wherein $\beta(s_1, s_2)$ is the angle between the consecutive straight segments $s_1$ and $s_2$;

$l(s_1)$ and $l(s_2)$ are lengths of the consecutive straight segments $s_1$ and $s_2$ respectively;

Comparing the computed relevance measure to a predetermined threshold; and

If the computed relevance measure meets the predetermined relevance threshold, identifying the common point as being a point of interest.

Identifying at least one bone attachment location close to the at least one point of interest can comprise:

Identifying if a respective one of the points of interest belongs to a linear bone attachment location defined by a pair of points of interest; and, for each identified linear bone attachment location, separating the respective one of the segmented blobs comprises performing a linear local morphological erosion along a line extending between the points of interest defining the linear bone attachment location;

otherwise, identifying the respective one of the points of interest as a punctual bone attachment location and separating the respective one of the segmented blobs comprises performing local morphological erosion around the punctual bone attachment location.

Identifying a pair of points of interest can comprise: for each potential pair of points of interest, grouping the points of interest in a pair and computing a distance separating two grouped points of the pair, comparing the computed distance to a predetermined distance threshold; and if the computed distance meets the predetermined distance threshold, associating the potential pair of interest points as being one linear bone attachment location.

In an embodiment, the image preprocessing further comprises performing a 3D adaptive thresholding processing to define thresholded blobs in the 2D images and generating binary masks from the thresholded blobs obtained by the 3D adaptive thresholding processing. The plurality of 2D images can be greyscale images and wherein the 3D adaptive thresholding processing can include the steps of:

For at least a sample of the plurality of 2D greyscale images:

Dividing each one of the 2D greyscale images of at least the sample in a plurality of sections;

Computing a local pixel intensity section threshold for each one of the sections;

Computing a global image pixel intensity threshold for each one of the 2D greyscale images of at least the sample using the local pixel intensity section thresholds computed for each one of the sections;

Computing a global volume pixel intensity threshold using the global image pixel intensity thresholds; and

Applying the global volume pixel intensity threshold to each one of the 2D greyscale images of the plurality of 2D greyscale images.

The global image pixel intensity threshold for each one of the 2D greyscale images of at least the sample can be computed as a maximum of the local pixel intensity section thresholds for the corresponding image.

The global volume pixel intensity threshold from the global image pixel intensity thresholds can be computed as a mean of the global image pixel intensity thresholds minus 1.5 times a standard deviation of the global image pixel intensity thresholds [mean(global image pixel intensity thresholds)-1.5std(global image pixel intensity thresholds)].

In an embodiment, the image preprocessing can comprise computing thresholded blobs in the images following the 3D adaptive thresholding processing and creating binary masks from the thresholded blobs.

Identifying regions of interest (ROIs) in the 2D images can comprise selecting regions in the 2D greyscale images of the imaging data including at least one of a respective one of the thresholded blobs and a respective one of the binary masks generated from the thresholded blobs.

Generating secondary segmented image data can comprise performing a blob masking validation following the segmentation, the segmentation generating a plurality of unmasked blobs, and wherein the blob masking validation comprises:

Applying the binary masks to the unmasked blobs to obtain masked blobs;

Determining at least one perceptual grouping property of each one of the masked blobs and the unmasked blobs;

For each corresponding pair of masked blobs and unmasked blobs,

Comparing the at least one perceptual grouping property of the masked blob to the at least one perceptual grouping property of the corresponding one of the unmasked blobs; and

Selecting the one of the masked blob and the corresponding one of the unmasked blobs having the highest perceptual grouping property as the segmented blob of the secondary segmented image data.

Segmentation can comprise a multiphase local-based hybrid level set segmentation carried out by minimizing an energy functional including a local-based edge term and a local-based region term computed locally inside a local neighborhood centered at each pixel of each one of the 2D images on which the multiphase local-based hybrid level set segmentation is performed, the local neighborhood being defined by a Gaussian kernel whose size is determined by a scale parameter; and the method further comprises initializing the multiphase local-based hybrid level set segmentation with the binary masks.

Performing the multiphase local-based hybrid level set segmentation on the regions of interest (ROIs) can comprise generating binary subimages including the segmented blobs and the method further comprises merging the binary subimages to generate a respective one of the 2D binary images including the segmented blobs.

In an embodiment, the image preprocessing further comprises:

Determining an initial image including at least one region of interest and determining a final image including at least one region of interest; and

Selecting a subset of 2D images including the initial image, the final image, and the images extending therebetween, wherein the primary image data consists of the subset of 2D images including the regions of interest (ROIs).

In an embodiment, identifying anatomical components in the 3D volume comprises:

Computing at least one subvolume feature for each one of the 3D subvolumes;

For each one of the 3D subvolumes, carrying out a bone identification processing comprising:

Identifying a closest one of the bones and comparing the at least one subvolume feature to features of the anatomical knowledge data corresponding to the closest one of the bones;

If the at least one subvolume feature for the respective one of the 3D subvolumes substantially corresponds to the features of the anatomical knowledge data for the closest one of the bones, associating the respective one of the 3D subvolumes to the closest one of the bones;

Otherwise, applying a selective 3D bone separation to the respective one of the 3D subvolumes and generating new 3D subvolumes.

Identifying anatomical components in the 3D volume can further comprise:

Identifying a 3D anatomical point of interest within the 3D volume;
Identifying a 3D subvolume closest to the 3D anatomical point of interest; and
Performing sequentially the bone identification processing by proximity to a last one of associated 3D subvolumes, starting from the 3D subvolume closest to the 3D anatomical point of interest.

In an embodiment, the local neighborhood is circular and performing the multiphase local-based hybrid level set segmentation further comprises: for each pixel of the regions of interest (ROIs), dynamically changing region descriptors based on a position of a center of the local neighborhood.

The computer implemented method further comprises: selecting a value of $\lambda$ to adjust a performance of the multiphase local-based hybrid level set segmentation with $\lambda$ being greater than 0 and smaller than 1, wherein $\lambda$ multiplies the local-based edge term and (1-$\lambda$) multiplies local-based region term.

In an embodiment, the regions of interest (ROIs) include two phases and the energy functional is:

$$\mathcal{F}_{2\text{-}phase}(\phi, c, b) = (1 - \lambda)\mathcal{E}_{region}(\phi, c, b) + \lambda\mathcal{E}_{edge}(\phi) + \mu\mathcal{R}_{p}(\phi)$$

where $\lambda$ is greater than or equal to 0 and smaller than or equal to 1, $\mu$ is a positive constant, $b$ is a bias field accounting for intensity inhomogeneity, and $c$ is a vector representing intensity-based constant values in disjoint regions,

$$\mathcal{E}_{edge}(\phi) = v\mathcal{L}_g(\phi) + \alpha\mathcal{A}_g(\phi) \quad (4)$$

wherein $v$ and $\alpha$ are normalization constants,

$$\mathcal{L}_g(\phi) \triangleq \int g_{\sigma,\tau}\,\delta(\phi)|\nabla\phi|d\mathbf{x}\quad,$$

$$\mathcal{A}_g(\phi) \triangleq \int g_{\sigma,\tau}\,\mathcal{H}(-\phi)d\mathbf{x}\quad,$$

$$g_{\sigma,\tau} \triangleq \frac{1}{1+f_{\sigma,\tau}}\,,$$

$$f_{\sigma,\tau}(\mathbf{x}) = \int K_\sigma(\mathbf{y}-\mathbf{x})u_\tau(\mathbf{y})d\mathbf{y}\quad,$$

$$u_\tau \triangleq |\nabla G_\tau * I|^2$$

with $G_\tau$ being a Gaussian kernel with a standard definition $\tau$ and $I$ being a gradient of the image, $K_\sigma$ a kernel function computed by means of a truncated Gaussian function of standard deviation $\sigma$, $\rho$ being the radius of the local circular neighborhood:

$$K_\sigma(u) = \begin{cases} \dfrac{1}{a}e^{-|u|^2/2\sigma^2}, & |u| \leq \rho \\ 0, & otherwise \end{cases}$$

and

$$H_\varepsilon(\phi) = \frac{1}{2}\left[1 + \frac{2}{\pi}\arctan\left(\frac{\phi}{\varepsilon}\right)\right]$$

with $\varepsilon$ being a parameter; and

$$\mathcal{E}_{region}(\phi, c, b) = \int\left(\sum_{i=1}^{N}(\int K_\sigma(\mathbf{y}-\mathbf{x})|I(\mathbf{x})-b(\mathbf{y})c_i|^2 d\mathbf{y})\mathcal{M}_i(\phi(\mathbf{x}))d\mathbf{x}\right.$$

$\mathcal{M}_i$ is a membership function of each region $\Omega_i$, and is defined as:

$$\mathcal{M}_1(\phi) = \mathcal{H}_\varepsilon(\phi)$$

$$\mathcal{M}_2(\phi) = 1 - \mathcal{H}_\varepsilon(\phi)$$

wherein $\mathcal{R}_p$ is a regularisation term:

$$\mathcal{R}_p(\phi) = \int p(|\nabla\phi|)d\boldsymbol{x}$$

and the minimization of the hybrid energy functional $\mathcal{F}$ is carried out by gradient descent method:

$$\frac{\partial\phi}{\partial t} = -\frac{\partial F_{2\ phase}}{\partial\phi}$$

In another embodiment, the energy functional is:

$$\mathcal{F}_{multiphase}(\Phi, c, b) = (1-\lambda)\mathcal{E}_{region}(\Phi, c, b) + \lambda\mathcal{E}_{edge}(\Phi) + \mu\mathcal{R}_p(\Phi)$$

where $\lambda$ is greater than or equal to 0 and smaller than or equal to 1, $\mu$ is a positive constant, b is a bias field accounting for intensity inhomogeneity, c is a vector representing intensity-based constant values in disjoint regions, and $\Phi$ is a vector formed by k level set functions $\Phi$i, i=1... k for k regions or phases;

$$\Phi = (\phi_1(\boldsymbol{y}), ..., \phi_k(\boldsymbol{y}))$$

and a number of the level set functions to be used is at least equal to:

$$k = log_2(\mathcal{N})$$

where $log_2$ is the logarithm to the base 2 and N is the number of the regions to be segmented in the image.

$$\mathcal{E}_{region}(\Phi, c, b) = \int \Sigma_{i=1}^{N} e_i(\boldsymbol{x})M_i(\Phi)\boldsymbol{x}))d\boldsymbol{x}$$

With:

$$e_i(\boldsymbol{x}) = \int K_\sigma |I(\boldsymbol{x}) - b(\boldsymbol{y})c_i|^2 \ d\boldsymbol{y}, \quad i=1,...,k$$

with $K_\sigma$, a kernel function computed by means of a truncated Gaussian function of standard deviation $\sigma$, referred to as the scale parameter,

$\mathcal{M}_i$ is a membership function of each region $\Omega_i$, and is defined as:

$$M_i(\Phi) = M_i(\phi_1(\boldsymbol{y}), ..., \phi_k(\boldsymbol{y})) = \begin{cases} 1, & \boldsymbol{y} \in \Omega_i \\ 0, & else \end{cases}$$

$$\mathcal{E}_{edge}(\Phi) = v\mathcal{L}_g(\Phi) + \alpha\mathcal{A}_g(\Phi)$$

Where:

$$\mathcal{L}_g(\Phi) = \Sigma_{j=1}^{k}\mathcal{L}_g(\phi_j)$$

$$\mathcal{A}_g(\,\Phi) = \sum_{j=1}^{k} \mathcal{A}_g(\phi_j)$$

wherein $v$ and $\alpha$ are normalization constants,

wherein $\mathcal{R}_p$ is a regularisation term:

$$\mathcal{R}_p(\,\phi)= \int p(|\nabla\phi|)dx$$

and the minimization of the multiphase hybrid energy functional $\mathcal{F}_{multiphase}$ by gradient descent method:

$$\frac{\partial\phi_1}{\partial t} = -\frac{\partial F_{multiphase}(\Phi)}{\partial\phi_1}, ..., \qquad \frac{\partial\phi_2}{\partial t} = -\frac{\partial F_{multiphase}(\Phi)}{\partial\phi_k} \; .$$

The present document refers to a number of documents, the contents of which are hereby incorporated by reference in their entirety.

In this specification, the terms "grayscale image" and "grayscale subimage" are intended to mean acquired images prior to the level set segmentation, either prior to or following a filtering process. The term "grayscale subimage" is intended to mean a region of interest (ROI) of a "grayscale image". The term "binary image" is intended to mean the images following segmentation, i.e. including one or several blobs. The term "binary subimage" is intended to mean a section of a binary image including or centered on at least one blob. In this specification, the term "blob" is intended to mean a single disconnected object in a binary image. In this specification, the term "anatomical bone boundaries" is intended to mean the contours of the physical bones of a section of a body structure.

## BRIEF DESCRIPTION OF THE DRAWINGS

Other objects, advantages and features will become more apparent upon reading the following non-restrictive description of embodiments thereof, given for the purpose of exemplification only, with reference to the accompanying drawings in which:

Figure 1 is a flowchart of sequential general steps of a method for performing multi-bone segmentation in imaging data according to an embodiment.

Figure 2A is a flowchart of sequential steps of an image preprocessing of the method for performing multi-bone segmentation in imaging data according to Figure 1, in accordance with an embodiment;

Figure 2B is a flowchart of sequential steps of a 3D adaptive thresholding processing of the image preprocessing of Figure 2A, in accordance with an embodiment.

Figures 3A and 3B are greyscale regions of interest (ROIs) showing a plurality of bones of an ankle respectively prior to and following a filtering processing of the image preprocessing of Figure 2A.

Figures 4A and 4B are greyscale images of bones of an ankle on which contours obtained by different level set segmentations have been applied.

Figures 5A, 5B, and 5C show an image of bones of an ankle, Figure 5A shows the grayscale image to be segmented, Figure 5B shows the image following the bone segmentation without applying binary masks, and Figure 5C shows the image following the bone segmentation with application of binary masks.

Figure 6 is a flowchart of sequential steps of the multi-bone segmentation process for performing multi-bone segmentation in imaging data according to Figure 1, in accordance with an embodiment.

Figure 6A is a flowchart of sequential steps of a blob masking validation of the multi-bone segmentation of Figure 6, in accordance with an embodiment.

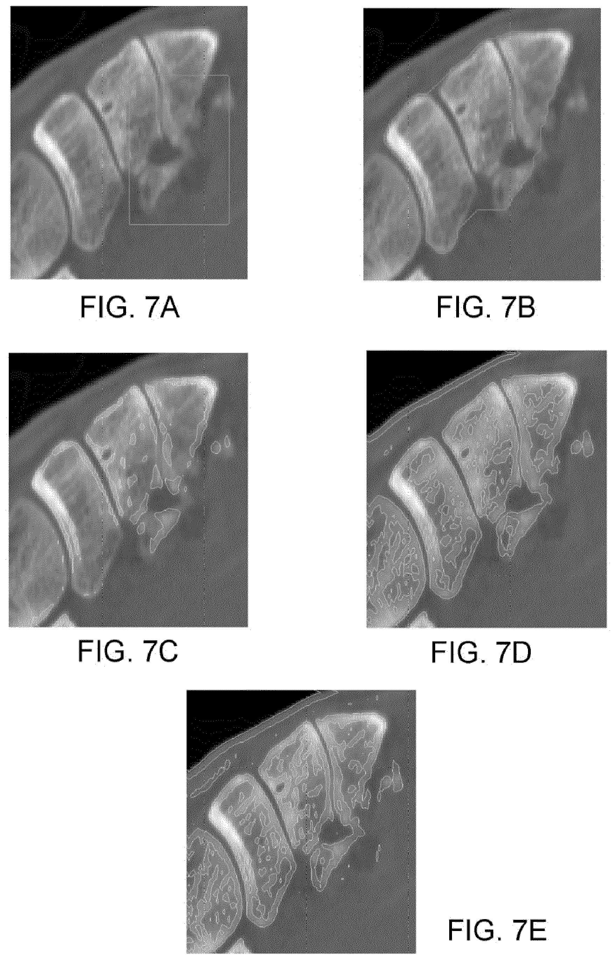

Figures 7A, 7B, 7C, 7D, and 7E are greyscale ROIs of bones of an ankle prior to and following multi-bone segmentation, wherein Figure 7A shows an initialization of a multiphase local-based hybrid level set segmentation with an arbitrary rectangular contour, Figure 7B shows an initialization of the multiphase local-based hybrid level set segmentation with a mask, Figure 7C shows the results of the bone segmentation with the multiphase local-based hybrid level set segmentation initialized with the arbitrary rectangular contour of Figure 7A, Figure 7D shows the results of the bone segmentation with the multiphase local-based hybrid level set segmentation initialized with the mask of Figure 7B wherein the multiphase local-based hybrid level set segmentation is carried out with the same number of iterations than Figure 7C, Figure 7E shows the results of the bone segmentation with the multiphase local-based hybrid level set segmentation initialized with the arbitrary rectangular contour of Figure 7A but carried out with a higher number of iterations than for Figures 7C and 7D.

Figures 8A, 8B, and 8C are binary images resulting from the bone segmentation with the multiphase local-based hybrid level set segmentation, wherein Figure 8A is a binary image showing unmasked (original) blobs resulting from the multiphase local-based hybrid level set segmentation, Figure 8B is the binary image of Figure 8A with a binary mask applied thereon to obtained masked blobs, i.e. following blob masking, and Figure 8C is the binary image of Figure 8A being selected as segmented blob with a substantially noise free background.

Figure 9 is a flowchart of sequential steps of a 2D blob separation processing following the multiphase local-based hybrid level set segmentation of Figure 6.

Figure 10A is a binary image of a segmented blob having a bone attachment location defined by a pair of interest points, the generated straight segments being overlaid on the segmented blob, Figure 10B is a section of the binary image of Figure 10A, enlarged, with two detected interest points joined by a line, Figure 10C is the binary image of Figure 10B following bone separation by local erosion along the line; and Figure 10D is the binary image of Figure 10A following bone separation by local erosion along the line.

Figure 11 is a flowchart of sequential steps of an anatomical component identification processing of the method for performing multi-bone segmentation in imaging data according to Figure 1, in accordance with an embodiment.

## DETAILED DESCRIPTION

In the following description, the same numerical references refer to similar elements. The embodiments mentioned in the present description are embodiments only, given solely for exemplification purposes.

Moreover, although the embodiments of the method and system for performing multi-bone segmentation consist of certain configurations as explained and illustrated herein, not all of these configurations are essential and thus should not be taken in their restrictive sense. It is to be understood, as also apparent to a person skilled in the art, that other suitable components and cooperation thereinbetween, as well as other suitable configurations, may be used for the method and system for performing multi-bone segmentation, as will be briefly explained herein and as can be easily inferred herefrom by a person skilled in the art.

As mentioned above, segmentation of bones from 3D images is important to many clinical applications such as visualization, enhancement, disease diagnosis, patient-specific implant design, cutting guide design, and surgical planning. The bones of a body structure, e.g. an articulation, are to be segmented with high precision.

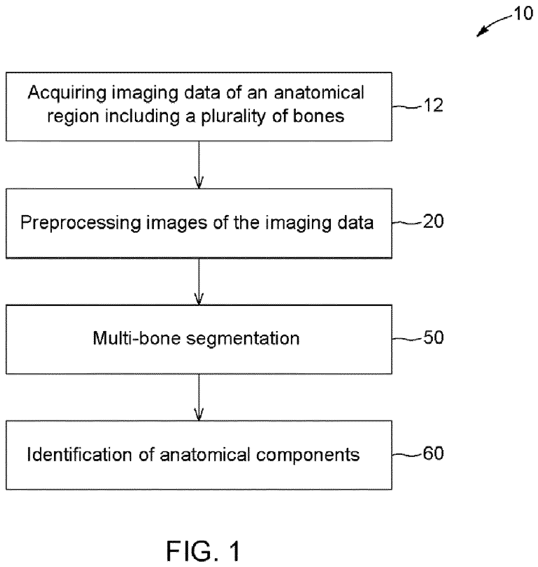

Referring generally to Figure 1, in accordance with one embodiment, there is provided a method 10 for performing multi-bone segmentation in imaging data of an anatomical region under study. The object of the method 10 is to generate data which can be used for creating a three-dimensional (3D) model in which each bone of the anatomical region is clearly distinguishable from the contiguous bones. At a high level, the method 10 includes the sequential steps of acquiring imaging data 12 to create a 3D grayscale volume image of an anatomical region under study including a plurality of bones (i.e. a body structure), performing an image preprocessing 20 on the acquired imaging data to generate primary image data, performing a subsequent multi-bone segmentation 50, including a multiphase local-based hybrid level set segmentation, on the primary image data to obtain at least one set of secondary segmented image data (in some implementations, two sets of secondary segmented image data are obtained) and, finally, performing an anatomical component identification processing 60 using anatomical knowledge data relative to the section of the body structure in order to generate tertiary segmented image data. The tertiary segmented image data can be used to generate a 3D bone reconstruction of the section of the body structure, i.e. the three-dimensional (3D) model in which each bone of the anatomical region is clearly distinguishable from the contiguous bones.

Each one of the above enumerated steps of the method 10 for performing multi-bone segmentation in body structure imaging data will now be described in more details below. The imaging data includes a plurality of 2D greyscale images of the body structure.

One skilled in the art will easily understand that the step of acquiring/obtaining imaging data 12 refers to the acquisition of bone structure data of at least the section of the body structure of the patient to be studied. It can be performed using an imaging apparatus operating according to any known image acquisition process or method. In an embodiment, the imaging data are acquired using computed axial tomography (CAT scan or CT scan). One skilled in the art will however understand that, in an alternative embodiment, the imaging data can be obtained using other known imaging techniques, such as, without being limitative, magnetic resonance imaging (MRI), ultrasound, or the like.

The 3D grayscale volume image, created from the imaging data acquiring step 12, is a common form of medical imaging scans, especially CT and MRI. The 3D grayscale volume image, or the body structure imaging data, includes a series of two-dimensional (2D) slices of the scanned body structure (or a plurality of 2D images) along one plane or direction, such as the sagittal, coronal, or transverse plane, with respect to the body structure, which can be referred to as the segmentation axis. In an embodiment, the thickness of each slices can be between about 0.6 mm and 1 mm with no or negligible spacing between the slices. One skilled in the art will however understand that, in an alternative embodiment, the slices can however be thinner or thicker than the above mentioned range. The thickness and spacing of the slices can be selected based on the body structure under study including the size of the bones contained in the section of the body structure. In an embodiment, each one of the bone structure images corresponds to a respective slice and is a 2D image. Thus, the volume of the section of the body structure is represented as a set of 2D grayscale images, extending substantially parallel to one another.

One skilled in the art will also understand that, in an embodiment, the acquisition of the imaging data 12 can be done according to multiple planes or directions with the data being combined or merged, as described in patent publication WO2013/166592, published November 14, 2013. For example, a first set of images may be acquired along a first plane, such as the sagittal plane, with missing information being provided using data acquired along a second plane, such as the coronal plane. It should be understood that any suitable plane can be used as the first plane or second plane, the above example being given solely for exemplary purposes. Moreover, other combinations or techniques to optimize the use of data along more than one orientation will be readily understood by those skilled in the art. In an embodiment where the acquisition of the imaging data 12 is performed according to multiple planes, in the steps described below, the imaging data are subsequently segmented according to the segmentation axis extending along the plane in which the series of slices to be analyzed extend.

Following the image acquisition step 12, the body structure image data including a plurality of 2D images, corresponding to slices extending along at least one segmentation axis, are processed to perform multi-bone segmentation through sequential execution of the image preprocessing 20, the multi-bone segmentation 50 including the multiphase local-based hybrid level set segmentation, and the anatomical component identification processing 60.

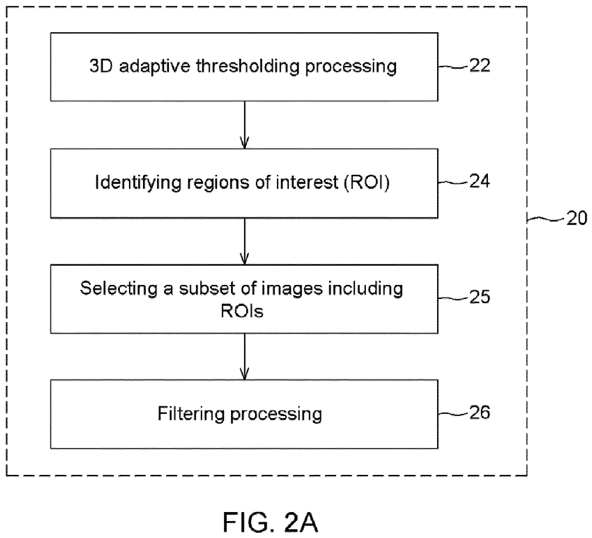

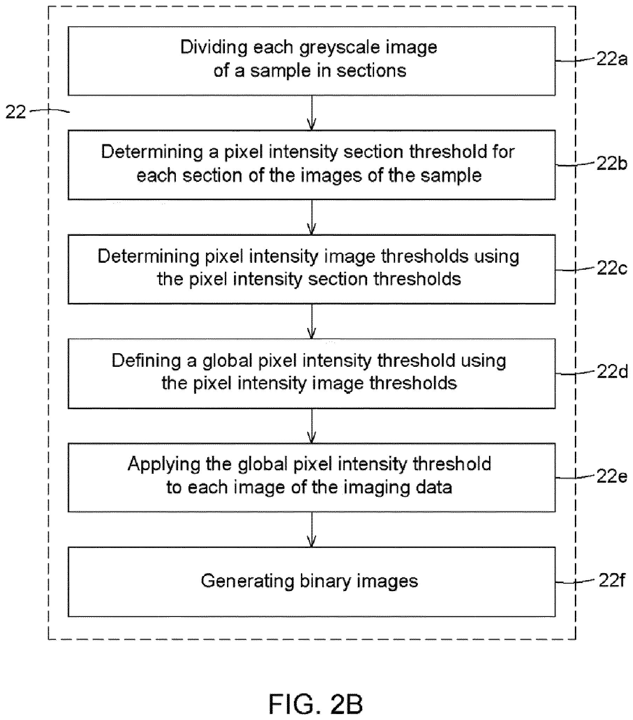

Referring to Figures 2A and 2B, in the embodiment shown, the image preprocessing 20 includes a combination of 3D adaptive thresholding processing 22, region of interest (ROI) identification 24, selection of a subset of images including ROIs 25, and filtering processing 26, being performed sequentially to obtain primary image data from the unprocessed bone structure imaging data. In an embodiment, the primary image data includes a plurality of 2D images. However, if the image preprocessing 20 includes the selection of a subset of images based on the initial and final slices including ROIs, the number of 2D images in the primary image data is smaller than the number of 2D images in the original body structure image data.

Referring to Figure 2B, in the embodiment shown, the 3D adaptive thresholding processing 22 is performed by determining a global volume pixel intensity threshold for converting the grayscale images of the unprocessed bone structure imaging data into binary images. In an embodiment, the global volume pixel intensity threshold can be determined using a sample of "N" of the grayscale images corresponding to slices of the imaging data. The use of a sample of the images for determining the global volume pixel intensity threshold for the 3D grayscale volume image allows the consumption of less processing power to perform the 3D adaptive thresholding processing 22, as opposed to the use of each one of the images of the imaging data. One skilled in the art will however understand that, in an alternative embodiment, the entire set of images can also be used in order to determine the global volume pixel intensity threshold. The 3D adaptive thresholding processing can include a step of selecting a sample of images from the bone structure imaging data. In a non-limitative embodiment, the sample is a uniformly distributed sample of the images corresponding to a slice of the imaging data. For example and without being limitative, the sample of images can be one image for each ten images of the imaging data. Once the global volume pixel intensity threshold is determined, the latter is subsequently applied to all of the 2D images of the imaging data which constitute the 3D grayscale volume image.

Still referring to Figure 2B, in an embodiment, the pixel intensity threshold of each one of the images of the sample of images, referred to as the global image pixel intensity threshold, is determined by first dividing each grayscale image of the sample in a plurality of sections 22a, such as, without being limitative, rectangular sections of 50 pixels by 50 pixels, 100 pixels by 100 pixels, or the like, and then, determining a pixel intensity section threshold for each one of the sections 22b. The pixel intensity section threshold can be seen as a local threshold as its value may change from a section to another of the image. Therefore, a set of "M" local pixel intensity thresholds is obtained for a single image which corresponds to "M" pixel intensity section thresholds, "M" being the number of sections for each grayscale image.

In an embodiment, the pixel intensity section threshold is determined using Otsu's method, which is well known to those skilled in the art and need not be described herein. One skilled in the art will understand that, in an alternative embodiment, other methods or techniques, different from the above mentioned Otsu's method, can be used for determining a pixel intensity threshold for each one of the sections. For instance and without being limitative, the following methods can be carried out: histogram shape, clustering, entropy object attribute, spatial, Pun thresholding, Kapur thresholding, fuzzy sets, etc.

In an embodiment, once the set of "M" local pixel intensity thresholds of the image are determined, a global image pixel intensity threshold is determined 22c for the image. In an embodiment, the global image pixel intensity threshold is determined by selecting the maximum of the set of "M" local pixel intensity thresholds of the corresponding image. It is appreciated that other methods or techniques, different from the above mentioned method, can be used for determining the global image pixel intensity threshold. Thus, for each image of the sample including "N" images, a global image pixel intensity threshold is then computed, which leads to generate a set of "N" global image pixel intensity thresholds for the "N" images of the sample.

Once the set of "N" global image pixel intensity thresholds is determined, a single global volume pixel intensity threshold for the 3D grayscale volume image is determined 22d using the formula below :

$$\text{Global volume pixel intensity threshold} = \text{mean(“N” global image pixel intensity thresholds)} - (1.5 \times \text{std(“N” global image pixel intensity thresholds))}$$

where mean("N" global image pixel intensity thresholds) corresponds to the mean of the set of "N" global image pixel intensity thresholds of the sample of images and std(set of "N" global image pixel intensity thresholds) corresponds to the standard deviation of the set of "N" global image pixel intensity thresholds of the sample of "N" images. One skilled in the art will understand that, in an alternative embodiment, a formula different from the one described above may be used in order to determine the global volume pixel intensity threshold from the set of "N" global image pixel intensity thresholds.

The above-described 3D adaptive thresholding combines local and global pixel intensity thresholds from a set of image samples of a 3D grayscale volume image in order to compute a single global volume pixel intensity threshold for the whole 3D grayscale volume image generated from all the 2D images of the imaging data. Moreover, the combination of local and global pixel intensity thresholds is suitable for 3D volume image thresholding with intensity inhomogeneity.

The global volume pixel intensity threshold is applied to the 3D grayscale volume image, i.e. to each one of the 2D images of the imaging data 22e, including the images of the sample of images, in order to complete the 3D adaptive thresholding processing 22. Following application of the global volume pixel intensity threshold, a 2D binary image is generated for each one of the images of the imaging data 22e, i.e. for each slice of the 3D grayscale volume image.

Even though in the embodiment described below, the 3D adaptive thresholding processing 22 is performed prior to a multiphase local-based hybrid segmentation, it is appreciated that it can be performed prior to any other suitable segmentation.

At least some of the binary images include blobs, which may include one or more bones. In the present specification, in order to distinguish the blobs obtained from 3D adaptive thresholding processing from blobs that will be obtained from the level set segmentation, the blobs obtained from 3D adaptive thresholding processing will be referred to as "thresholded blobs", i.e. blobs obtained after the 3D adaptive thresholding processing, while the blobs obtained from the level set segmentation will be referred to as "segmented blobs", i.e. blobs obtained after the segmentation and, more particularly, in an embodiment, the multiphase level set segmentation.

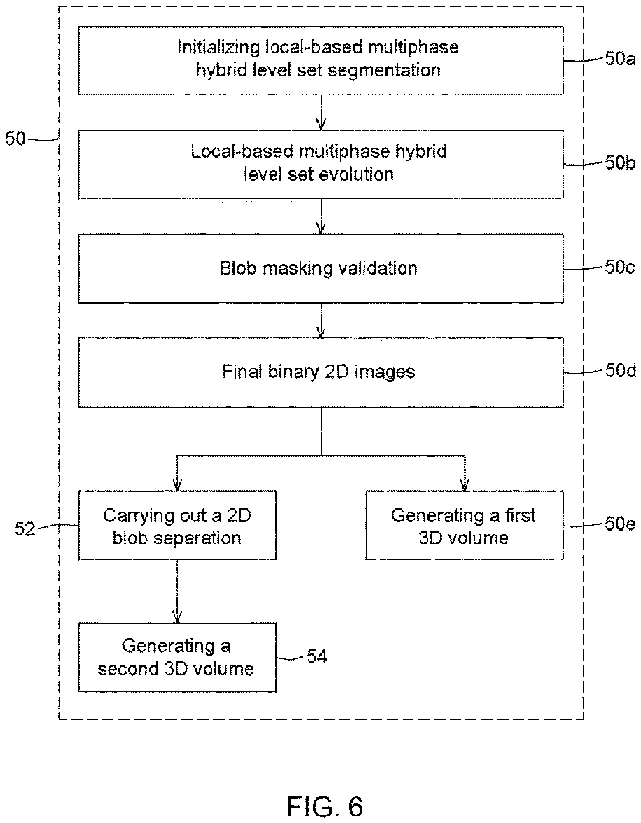

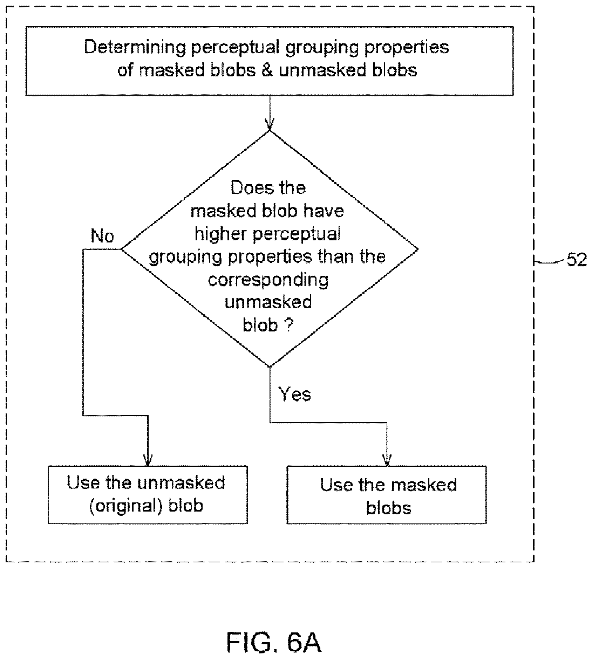

Thus, following the 3D adaptive thresholding processing, thresholded blobs in the binary images are identified. Morphological post-processing can be applied on these binary images in order to get closed thresholded blobs. The 3D adaptive thresholding processing can be seen as a coarse segmentation as each individual blob in each 2D binary image may contain pixels belonging to more than one bone. Each individual thresholded blob in each of 2D binary images is then identified and used as a binary mask. These binary masks have three main functions. First, they are used to extract/identify regions of interest (ROI) 24 from the grayscale images. Second, they are used to initialize the multiphase local-based hybrid level set function 50a, as will be described in more details below in reference to Fig. 6. Third, they are applied on the binary segmented images 50c in order to eliminate remaining background noise after the multiphase local-based hybrid segmentation 50b, as will be described in more details below also in reference to Fig. 6.

Referring back now to Figure 2A, regions of interest (ROI) are then identified in each one of the grayscale images, i.e. region of interest identification 24 is carried out using the binary masks from the thresholded blobs of the binary images obtained by the 3D adaptive thresholding processing 22. The ROIs are potential grayscale regions containing one or more than one bone. Thus, each one of the ROIs includes at least one of a respective one of the thresholded blobs and a respective one of the binary masks generated from the thresholded blobs. As will be described in more details below, the multiphase local-based hybrid segmentation is applied to each of these ROIs in order to assign the segmented pixels to a single bone 60. Therefore, the subsequent multiphase local-based hybrid segmentation can be seen as a finer segmentation than the 3D adaptive thresholding processing 22.

The grayscale ROIs are subimages that will be segmented during the multi-bone segmentation 50 and the resulting blobs will be used as input to the anatomical component identification processing 60, which will be described in further details below. The blobs obtained from the multi-bone segmentation 50 are different from the blobs obtained following the 3D adaptive thresholding processing 22, which are referred to as "thresholded blobs".

Then, to reduce the following processing time, a subset of images is retrieved 25 by identifying a first one of the 2D grayscale images including at least one ROI and a last one of the 2D grayscale images including at least one ROI and selecting the images inbetween and including the first and the last images, i.e. the initial and the final images. The images before the initial image and the images after the final image are free of ROI, i.e. do not contain pixels belonging to a bone. For instance, the original set of images can include 512 images with image 183 being the first one to include a ROI and image 347 being the last one to include a ROI. Thus, the subset of images includes image 183 to 347. The following processing steps are performed on 165 images instead of 512 images. The determination of a subset of images including the initial and the final images and the images extending inbetween is an optional step.

Thus, the binary masks obtained from the 3D adaptive thresholding processing 22 are used to select unprocessed grayscale ROIs, in the set of greyscale images of the unprocessed bone structure imaging data including the initial and the final images and the images extending inbetween.

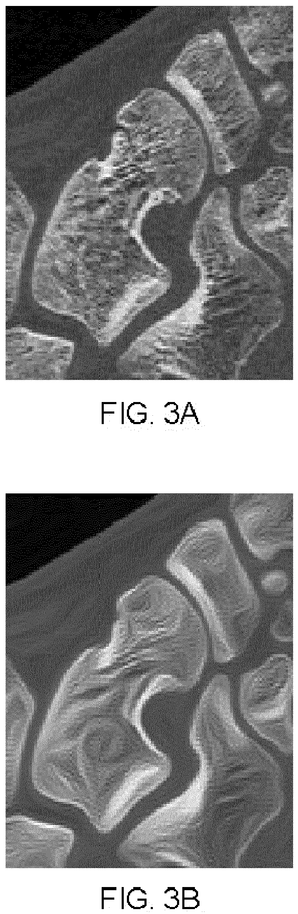

In an embodiment, the image preprocessing process 20 further includes a filtering processing 26, which is carried out on the subset of greyscale ROIs. In an embodiment, the filtering processing 26 is performed on each one of the greyscale ROIs of the subset of images, using an anisotropic coherence filtering process which is, once again, well known to those skilled in the art and need not be described herein. The anisotropic coherence filtering process reduces noise and increases the contrast at the boundary of the bones in each one of the grayscale ROIs, as shown in Figures 3A, 3B. Figure 3A shows an original greyscale ROI while Figure 3B shows the same ROI following the filtering process. The contrast around the boundary of the bones in Figure 3B is enhanced with respect to the background in comparison with unprocessed Figure 3A and the noise along the boundary of the bones is reduced.

In an embodiment, the filtering processing 26 is performed on the ROIs of the subset of the images. One skilled in the art will understand that, in an alternative embodiment, the filtering processing 26 can be performed on each entire image of the subset of images, rather than on the ROIs.

Moreover, it will be understood that, in an alternative embodiment, the filtering processing 26 can be performed using a filtering process or method different than the above mentioned anisotropic coherence filtering process, which also allows the above mentioned reduction of the noise and increase of the contrast at the boundaries of the bones in each one of the greyscale ROIs of the subset. Following the filtering processing 26, a plurality of filtered greyscale ROIs or images is obtained.

The image preprocessing process 20 generates primary image data, e.g. a subset of filtered greyscale 2D images with ROIs or greyscale 2D images with filtered ROIs, from an entire set of images including unprocessed greyscale imaging data. However, in order to produce highly relevant data as is required to obtain an accurate 3D bone model, the 2D images from the primary image data require additional bone segmentation, which is provided by the following steps of the method described below.

Referring back to Figure 1, the multi-bone segmentation method 10 further comprises a multi-bone segmentation 50 wherein a multiphase local-based hybrid level set segmentation is carried out. The multiphase local-based hybrid level set segmentation is carried out on each ROI of the 2D images of the primary image data in order to generate secondary segmented image data including a plurality of 2D binary images. In an embodiment, the multiphase local-based hybrid level set segmentation generates a first set of secondary segmented image data.

There exists two major classes of level set methods for image segmentation: region-based models and edge-based models.

Region-based level sets rely on using region descriptor as intensity mean, Gaussian distribution or texture attribute of the regions and can be effective to detect objects in images whose gradient is not well defined, i.e. with weak and smooth boundary. Most of region-based level set methods rely on computing two global region descriptors for all pixels of the whole image, one for foreground pixels and one for background pixels. Therefore, they are effective when the image intensities are homogenous. However, when there are strong intensity inhomogeneities in the images, there can be an overlap between the distributions of the intensities in the regions. Therefore, it is impossible to compute global region descriptors to guide the evolution of the contour.

To overcome the non-homogeneity of the images, local region-based level sets have been proposed in the literature. In this approach, the region descriptor is computed locally inside a local circular neighborhood centered at each point of the whole image. This local circular neighborhood is designed by means of a Gaussian kernel, whose size is referred to as the scale parameter. Therefore, the region descriptors vary with the center of each local circular neighborhood and change dynamically over the image. A unique radius of the circular neighborhood has to be defined carefully with respect to the degree of the intensity homogeneities. For images with high degree of intensity inhomogeneities, small scale parameters should be used. Unfortunately, the level set is less robust to initialization with small scale parameter than with larger one.

As an example of local region-based level set, in "C. Li, C. Kao, J. Gore, and Z. Ding, Minimization of Region-Scalable Fitting Energy for Image Segmentation, IEEE Trans Image Process. 2008 Oct; 17(10): 1940-1949", Li *et al.* compute local mean intensity inside a local neighborhood. In some extent, this local region-based level set is able to deal with intensity homogeneity. However, for some images with severe intensity homogeneity, as in the case of CT or MRI imagery, segmentation may lead to unsatisfactory results and require an intensity inhomogeneity correction as preprocessing.

An improved approach was proposed by the same team of researchers by following the seminal work of Mumford and Shah in "D. Mumford & J. Shah (1989), Optimal Approximations by Piecewise Smooth Functions and Associated Variational Problems, Communications on Pure and Applied Mathematics, XLII(5): 577-685." who have restated image segmentation methods as a functional minimization in order to compute optimal approximations of the original image to be segmented by a piecewise smooth function.

Therefore, Li *et al.* in "C. Li, R. Huang, Z. Ding, C. Gatenby, D. N. Metaxas, and J. C. Gore, A Level Set Method for Image Segmentation in the Presence of Intensity Inhomogeneities with Application to MRI, IEEE Trans. Image Processing, vol. 20 (7), pp. 2007-2016, 2011", model an acquired image as:

$$I = bJ + n \qquad\qquad (1)$$

which describes real-world image model with intensity inhomogeneity, where b, referred to as bias field, corresponds to the intensity inhomogeneity, J being the true image and n an additive noise.

Instead of computing a local mean intensity as a local region descriptor, in "C. Li, R. Huang, Z. Ding, C. Gatenby, D. N. Metaxas, and J. C. Gore, A Level Set Method for Image Segmentation in the Presence of Intensity Inhomogeneities with Application to MRI, IEEE Trans. Image Processing, vol. 20 (7), pp. 2007-2016, 2011", Li *et al.* proposed a region-based level set which is based on a local clustering of the image intensities within a local neighborhood, the image intensities being modeled by Equation (1). A local cluster center from a Gaussian distribution of the local intensities is then computed instead of a local mean intensity. Compared to other local region-based level sets, this approach is robust with respect to the intensity inhomogeneity as it incorporates this information in the model.

Edge-based level set models can be applied to images with intensity inhomogeneity as they rely only on the gradients in the image and include edge detector dependent terms in the functional. The aim of this approach is to attract the contour towards the boundaries of the structure to be segmented and to stop the evolution of the level set once the desired object edges are obtained. One example of edge-based level set is proposed in "C. Li, C. Xu, C. Gui, and M. D. Fox, "Distance Regularized Level Set Evolution and its Application to Image Segmentation", IEEE Trans. Image Processing, vol. 19 (12), pp. 3243-3254, 2010".

However, there are at least two drawbacks of this approach. First, when the images are too noisy, as this is the case for most medical imaging data, the contour can be attracted by local minimum and the level set can produce unwanted results. Second, when the objects to be detected have weak boundaries, the contour may continue to evolve outside the structure to be detected and produce boundary leakage problems. Therefore, those techniques are effective for images with salient and well-defined boundaries. In addition, edge-based level sets are known to be very sensitive to the initial conditions, i.e. the initial level set function.

In the case of bone segmentation and due to the nature of the images, especially in CT imagery with inhomogeneous intensities, small bone inter-gap (or interstitial distance), weak boundaries, high degree of noise, local region-based level sets are definitely appropriate. However, for bone segmentation, the minimum inter-bone gap must also be taken into account in addition to the degree of intensity inhomogeneities while choosing the appropriate scale parameter.

As the bone inter-gap is small, a small local neighborhood must be used in order to be able to locally segment very close bones, which requires a small scale parameter for all the images. Moreover, when the intensity inhomogeneities are high, a small scale parameter should also be chosen. However, there are drawbacks to using small scale parameters as they yield more edges and tend to produce segmented images with high background noise. Therefore, the iteration number of the level set must be set high enough in order to get rid of these unwanted pixels, which may increase considerably the processing time. Furthermore, the initialization must be close enough to the anatomical bone boundaries because, as mentioned above, edge-based level set and local region-based level set with a small scale parameter are very sensitive to the initial conditions.

It was found that local edge-based terms can be added to the local region-based terms to improve the local region-based level set, as proposed by Li *et al..* in "C. Li, R. Huang, Z. Ding, C. Gatenby, D. N. Metaxas, and J. C. Gore, A Level Set Method for Image Segmentation in the Presence of Intensity Inhomogeneities with Application to MRI, IEEE Trans. Image Processing, vol. 20 (7), pp. 2007-2016, 2011". It was found that these new additional local edge terms allow the level set to converge rapidly and be attracted to boundaries with high gradient intensity, i.e. boundaries of bones. Thus, the processing times are lower and the noise in the background are more efficiently suppressed.

The association of the local region-based terms and local edge-based terms is referred to as multiphase local-based hybrid level set, wherein the term 'multiphase' refers to the case where more than two regions have to be segmented. When only two phases are involved in order to segment two disjoint regions, i.e., the bone regions, as foreground, and the background region, the level set is referred to as two-phase local-based hybrid level set.

The multiphase local-based hybrid level set segmentation is based on the minimization of an energy functional which depends on both region and edge data, as described above. It has been found suitable to segment bones with weak or fuzzy boundaries, to segment close bones when their inter-bone gap is extremely narrow or even disappears, and to segment images with high degree of intensity inhomogeneity. An embodiment of the energy functional is provided below in Equation (2).

The balance of the edge-based term and the region-based term, represented by a parameter $\lambda$ in the following equations, has to be defined for the whole imaging data.

As mentioned above, the initialization must be close enough to the anatomical bone boundaries because the hybrid level set is very sensitive to the initial conditions. To deal with the initialization sensitivity of the hybrid level set, the binary masks, obtained with the 3D adaptive thresholding processing 22, are used to initialize the multiphase local-based hybrid level set function. It has been found that the association of local and global pixel intensity thresholds in the 3D adaptive thresholding processing 22, described above, provides binary masks with contours close to the anatomical bone boundaries, which is a desired property of initial conditions for the hybrid level set.

The multiphase hybrid level set segmentation is local since the intensities clustering and the edge detector function are computed inside a local circular neighborhood centered at each point of the filtered grayscale ROIs. Their values change dynamically over the image with respect to the position of the center of the neighborhood. The local circular neighborhood is defined by means of a Gaussian kernel, whose size is defined by a parameter, referred to as the scale parameter. It depends essentially on the minimum inter-bone gap for the whole imaging data and on the severity of the intensity inhomogeneities. This is a desired property for a narrow joint area (or inter-bone gap or interstitial distance) between two or more too close neighboring bones and for greyscale images with severe intensity inhomogeneities.

In an embodiment, a single scale parameter is used within all the ROIs in the primary image data and it does not change from one ROI to another, nor inside a single ROI.

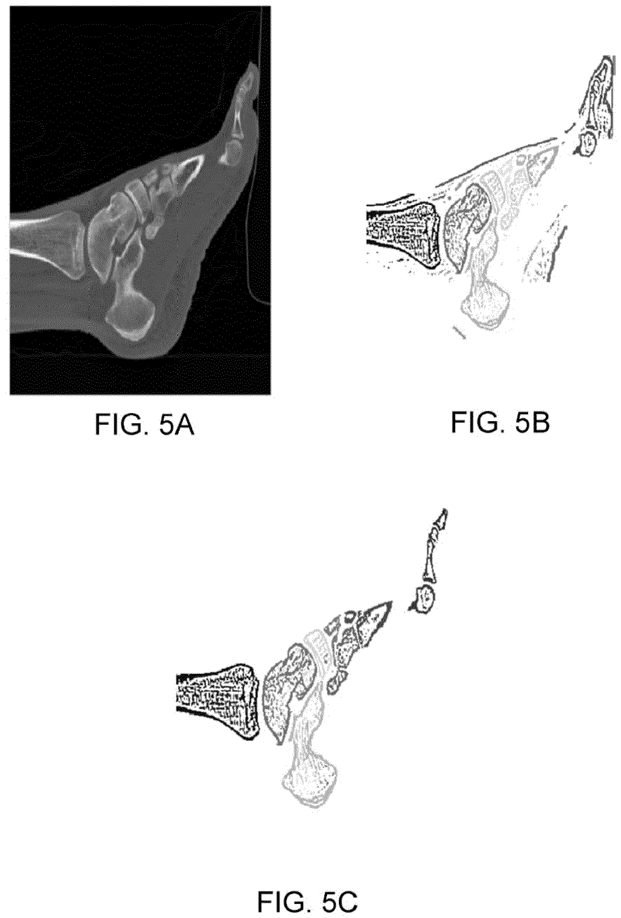

In an embodiment, the multiphase local-based hybrid level set segmentation is performed on each one of the ROIs of each one of the 2D images of the primary image data. As mentioned above, in an embodiment, the first purpose of the binary masks is to define ROIs in the 2D greyscale images and to hide everything except the inner section delimited by each one of them. As shown in Figures 5A and 5B, partial masking of the ROIs with the binary masks eliminates the bone-free area and lower noise. Figure 5A shows an original grayscale image to be segmented. Figure 5B shows the result of the multiphase local-based hybrid level set segmentation on the greyscale image in Figure 5A without applying binary masks. Finally, Figure 5C shows the whole segmented image following the multiphase local-based hybrid level set segmentation with application of binary masks. Figure 5C illustrates the third purpose of the binary masks as reducing considerably the remaining background noise after the multiphase level set segmentation. For Figures 5B and 5C, as the multiphase local-based hybrid level set segmentation is applied on the ROIs of the image, each whole segmented image is obtained after merging all the segmented ROIs of the image.

As shown in Figures 5B and 5C, since application of the binary masks hides everything, except the inner section delimited by each one of them, the multiphase local-based hybrid level set segmentation is applied on each of the grayscale ROIs of the primary image data, following application of the binary masks obtained by 3D adaptive thresholding processing.

As level set segmentation is very time-consuming, partial masking of the grayscale images of the primary image data reduces the processing time, the noise, and other tissues that may be segmented in the background, the multiphase local-based hybrid level set segmentation being only applied on the grayscale ROIs whose sizes are much reduced compared to the whole image size.

Even though in the embodiment described herein, the multiphase local-based hybrid level set segmentation is applied on ROIs, it is appreciated that, in an alternative embodiment, it can be applied on the entire greyscale image.

As a region-based level set segmentation with a smaller scale parameter may yield a segmented image with more background noise than a larger one, the additional edge terms allow the level set to converge rapidly and be attracted to boundaries with high gradient intensity, i.e. boundaries of bones.

The multiphase local-based hybrid level set segmentation performs a partition of a ROI which includes regions belonging to more than one bone, in multiple blobs (or segments), each corresponding to one or more bones. The partition of the ROI is performed according to a set of image data such as and without being limitative, image intensity, intensity gradient, curvature or the like, and generates the secondary segmented image data including a 3D volume generated from a plurality of 2D images with segmented blobs. Additional image data such as texture and/or shape of the contour can be included in the level set algorithm. Texture can include applying constraints regarding the pixels inside the ROI while shape can include applying continuity and curvature constraints on the contour.

In reference to Figure 6, more detailed steps of the multi-bone segmentation 50 will now be described. In step 50a, the multiphase local-based hybrid level set is first initialized. As mentioned above, in an embodiment, each binary mask, obtained from the 3D adaptive thresholding processing, is used for the initialisation of the level set on each grayscale ROI which corresponds to the second purpose of the binary masks. In an embodiment, as mentioned above, instead of carrying out the level set on the whole image, the level set method is performed solely on the ROIs to reduce the processing time and the noise in the background of the whole images. However, in alternative embodiment, it can be performed on the entire greyscale image.

Then, in step 50b, the evolution of the multiphase local-based hybrid level set is performed. In the following, equations for a two-phase local-based hybrid level set, i.e. for segmenting two regions known as foreground and background, are given. In an embodiment, the energy functional for a two-phase model, in Equation (2) below, is to be minimized:

$$\mathcal{F}_{2\text{-phase}}(\phi, c, b) = (1 - \lambda)\mathcal{E}_{region}(\phi, c, b) + \lambda\mathcal{E}_{edge}(\phi) + \mu\mathcal{R}_p(\phi) \quad (2)$$

where $\lambda$ is a positive constant that balances the contribution of the region-based terms and the edge-based terms ($0<\lambda<1$), $\phi$ being the level set function for a two-phase model, a phase corresponding to a region, $b$ being the bias field accounting for the intensity inhomogeneity, and $c$ being a vector representing intensity-based constant values in disjoint regions. The parameters $b$ and c are further described in Li *et al.* in "C. Li, R. Huang, Z. Ding, C. Gatenby, D. N. Metaxas, and J. C. Gore, A Level Set Method for Image Segmentation in the Presence of Intensity Inhomogeneities with Application to MRI, IEEE Trans. Image Processing, vol. 20 (7), pp. 2007-2016, 2011".

In an embodiment, a relatively low value of $\lambda$, for instance and without being limitative smaller than 0.5, can be selected for imaging data characterized by weak boundaries, so as to privilege local-based region terms over local-based edge terms. In an embodiment, if the imaging data are relatively noisy with strong bone boundaries, a relatively high value of $\lambda$, for instance and without being limitative higher than 0.5, can be selected in order to privilege local-based edge terms. This can be combined with a relatively high scale parameter in order to get rid of local minima introduced by the noise.

For the region-based terms, in the embodiment below, the model based on local clustering criterion proposed by Li *et al.* in "C. Li, R. Huang, Z. Ding, C. Gatenby, D. N. Metaxas, and J. C. Gore, A Level Set Method for Image Segmentation in the Presence of Intensity Inhomogeneities with Application to MRI, IEEE Trans. Image Processing, vol. 20 (7), pp. 2007-2016, 2011". was followed with:

$$\mathcal{E}_{region}(\phi, c, b) = \int \left(\sum_{i=1}^{N}\left(\int K_\sigma(\mathbf{y} - \mathbf{x})|I(\mathbf{x}) - b(\mathbf{y})c_i|^2 d\mathbf{y}\right)\mathcal{M}_i(\phi(\mathbf{x}))d\mathbf{x} \quad (3)$$

with $K_\sigma$, a kernel function computed by means of a truncated Gaussian function of standard deviation $\sigma$, referred to as the scale parameter, $\rho$ being the radius of the circular neighborhood:

$$K_\sigma(u) = \begin{cases} \dfrac{1}{a}e^{-|u|^2/2\sigma^2}, & |u| \leq \rho \\ 0, & otherwise \end{cases}$$

$\mathcal{M}_i$ is a membership function of each region $\Omega_i$, and is defined as:

$$\mathcal{M}_1(\phi) = \mathcal{H}_\varepsilon(\phi)$$

$$\mathcal{M}_2(\phi) = 1 - \mathcal{H}_\varepsilon(\phi)$$

$\mathcal{H}_\varepsilon$ is the Heaviside function and is defined as:

$$H_\varepsilon(\phi) = \frac{1}{2}\left[1 + \frac{2}{\pi}\arctan\left(\frac{\phi}{\varepsilon}\right)\right]$$

depending on the parameter $\varepsilon$.

The multiphase local-based hybrid level set introduces a new local-based edge term, as follows:

$$\mathcal{E}_{edge}(\phi) = \nu\mathcal{L}_g(\phi) + \alpha\mathcal{A}_g(\phi) \quad (5)$$

$\nu$ and $\alpha$ are normalization constants.

Where:

$$\mathcal{L}_g(\phi) \triangleq \int g_{\sigma,\tau}\,\delta_\varepsilon(\phi)|\nabla\phi|d\mathbf{x} \quad (6)$$

is the weighted length which computes the line integral over each piecewise smooth curves inside each local neighborhood which size is depending on $\sigma$, and adds them up for the whole image or the ROI. $\delta_\varepsilon(\varPhi)$ is a derivative of the Heaviside function $\mathcal{H}_\varepsilon$.

$$\mathcal{A}_g(\phi) \triangleq \int g_{\sigma,\tau}\,\mathcal{H}_\varepsilon(-\phi)d\mathbf{x} \quad (7)$$

is the weighted area of the region.

A local-based edge indicator function $g_{\sigma,\tau}$ is used as the weight of the two terms. These two local-based edge dependent terms are minimized when the curve is on object boundaries. The local-based edge indicator function $g_{\sigma,\tau}$ is defined as follows:

$$g_{\sigma,\tau} \triangleq \frac{1}{1+f_{\sigma,\tau}} \quad (8)$$

Where $f_{\sigma,\tau}$ is a local-based edge function defined as:

$$f_{\sigma,\tau}(\mathbf{x}) = \int K_\sigma(\mathbf{y}-\mathbf{x})u_\tau(\mathbf{y})d\mathbf{y} \quad (9)$$

$u_\tau$ is the magnitude of image gradient:

$$u_\tau \triangleq |\nabla G_\tau * I|^2 \quad (10)$$

$G_\tau$ being a Gaussian kernel with a standard definition $\tau$ and I being the grayscale image.

$\mathcal{R}_p$ is the distance regularization term, as proposed by Li *et al.* in "C. Li, C. Xu, C. Gui, and M. D. Fox. Distance Regularized Level Set Evolution and its Application to Image Segmentation, IEEE Trans. Image Processing, vol. 19 (12), pp. 3243-3254, 2010" and defined as:

$$\mathcal{R}_p(\phi) = \int p(|\nabla\phi|)dx \quad (11)$$

The segmentation results are obtained through the minimization of the hybrid energy functional $\mathcal{F}$ by gradient

descent method:

$$\frac{\partial \phi}{\partial t} = - \frac{\partial F_{2\_phase}}{\partial \phi} \quad (12)$$

Which gives:

$$\frac{\partial \phi}{\partial t} = -(1 - \lambda)\,\delta_\varepsilon(\phi)(e_1 - e_2) + \lambda(\nu\,\delta_\varepsilon(\phi)div(g_{\sigma,\tau}\frac{\nabla\phi}{\|\nabla\phi\|}) + \alpha\,g_{\sigma,\tau}\,\delta(\phi))$$

$$+ \mu\,\mathrm{div}(d_p(|\nabla\phi|)\,\nabla\phi) \quad (13)$$

With:

$$e_i(\mathbf{x}) = \int K_\sigma(\mathbf{y} - \mathbf{x})|I(\mathbf{x}) - b(\mathbf{y})c_i|^2 \, d\mathbf{y}, \quad i=1,\ 2 \quad (14)$$

i=1 for the first region and i=2 for the second region.

$\delta_\varepsilon$ is the derivative of the Heaviside function $\mathcal{H}_\varepsilon$ and depends also on $\varepsilon$:

$$H_\varepsilon(\phi) = \frac{1}{2}\left[1 + \frac{2}{\pi}\arctan\left(\frac{\phi}{\varepsilon}\right)\right] \quad (15)$$

$$\delta_\varepsilon(\phi) = H'\varepsilon(\phi) = \frac{1}{\pi}\frac{\varepsilon}{\varepsilon^2 + \phi^2} \quad (16)$$

The last term of (13) corresponds to the regularization term $\mathcal{R}_p(\Phi)$, $\mu$ is a positive constant.

The level set is initialized by:

$$\phi_0(x) = \begin{cases} -c_0, & \text{if } x \text{ is inside the mask} \\ c_0, & \text{otherwise} \end{cases} \quad (17)$$

where $c_0$ is a constant.

For the multiphase local-based hybrid level set, i.e. for segmenting more than two regions or two phases, the energy functional to be minimized is:

$$\mathcal{F}_{multiphase}(\Phi, c, b) = (1 - \lambda)\mathcal{E}_{region}(\Phi, c, b) + \lambda\mathcal{E}_{edge}(\Phi) + \mu\mathcal{R}_p(\Phi) \quad (18)$$

Where $\Phi$ is a vector formed by k level set functions $\phi_i$, i=1...k for k regions or phases.

$$\Phi = (\phi_1(y), \dots, \phi_k(y))$$

The number of the level set functions to be used is at least equal to:

$$k = log_2(N)$$

where $log_2$ is the logarithm to the base 2, N is the number of the regions to be segmented in the image.

For instance, in order to segment an image with four regions, i.e. N = 4, at least two level set functions are used in the proposed multiphase local-based hybrid level set.

$\lambda$ is still a positive constant that balances the contribution of the region-based terms and the edge-based terms $(0<\lambda<1)$.

For the region-based terms in the multiphase local-based hybrid level set, Li et al. in "C. Li, R. Huang, Z. Ding, C. Gatenby, D. N. Metaxas, and J. C. Gore, A Level Set Method for Image Segmentation in the Presence of Intensity Inhomogeneities with Application to MRI, IEEE Trans. Image Processing, vol. 20 (7), pp. 2007-2016, 2011" was followed:

$$\mathcal{E}_{region}(\ \Phi,\ c,\ b) = \int \sum_{i=1}^{N} e_i(\mathbf{x}) M_i(\Phi(\mathbf{x})) d\mathbf{x} \quad (19)$$

where $e_1(x)$ is given by (14).

$$M_i(\Phi) = M_i(\phi_1(\mathbf{y}), \dots, \phi_k(\mathbf{y})) = \begin{cases} 1, & \mathbf{y} \in \Omega_i \\ 0, & else \end{cases}$$

$\Omega_i$ being the region i.

The edge-based terms in the multiphase local-based hybrid level set are:

$$\mathcal{E}_{edge}(\ \Phi) = v \mathcal{L}_g(\ \Phi) + \alpha \mathcal{A}_g(\ \Phi) \quad (20)$$

Where:

$$\mathcal{L}_g(\ \Phi) = \sum_{j=1}^{k} \mathcal{L}_g(\phi_j) \quad (21)$$

$$\mathcal{A}_g(\ \Phi) = \sum_{j=1}^{k} \mathcal{A}_g(\phi_j) \quad (22)$$

With $\mathcal{L}_g(\phi_j)$ and $\mathcal{A}_g(\phi_j)$ being the new local-based edge terms in (6) and (7).

The segmentation results are obtained through the minimization of the multiphase hybrid energy functional $\mathcal{F}_{multiphase}$ by gradient descent method:

$$\frac{\partial \phi_1}{\partial t} = - \frac{\partial F_{multiphase}(\Phi)}{\partial \phi_1}, \ \dots, \quad \frac{\partial \phi_k}{\partial t} = - \frac{\partial F_{multiphase}(\Phi)}{\partial \phi_k} \quad (23)$$

which gives:

$$\frac{\partial \phi_1}{\partial t} = - (1 - \lambda) \left( \sum_{i=1}^{N} \frac{\partial M_i(\Phi)}{\partial \phi_i} e_i \right) + \lambda \left( v\ \delta_\epsilon(\phi_1) div(g_{\sigma, r} \frac{\nabla \phi_i}{\|\nabla \phi_i\|}) + \alpha g_{\sigma, r} \delta(\phi_1) \right) \quad (24)$$

$$+ \mu div\ (d_p(|\ \nabla \phi_1 |)\ \nabla \phi_1)$$

$$\frac{\partial \phi_k}{\partial t} = - (1 - \lambda) \left( \sum_{i=1}^{N} \frac{\partial M_i(\Phi)}{\partial \phi_k} e_i \right) + \lambda \left( v\ \delta_\epsilon(\phi_k) div(g_{\sigma, r} \frac{\nabla \phi_k}{\|\nabla \phi_k\|}) + \alpha g_{\sigma, r} \delta(\phi_k) \right) \quad (25)$$

$$+ \mu div(d_p(|\ \nabla \phi_k |)\ \nabla \phi_k)$$

For instance, for a four phase model with two level set functions $\Phi_1$ and $\Phi_2$, the membership functions $M_1$, $M_2$, $M_3$ and $M_4$ are expressed as:

$$M_1(\phi_1, \phi_2) = H_\varepsilon(\phi_1) \ H_\varepsilon(\phi_2)$$

$$M_2(\phi_1, \phi_2) = H_\varepsilon(\phi_1)( \ 1 - H_\varepsilon(\phi_2))$$

$$M_3(\phi_1, \phi_2) = (1 - H_\varepsilon(\phi_1))H_\varepsilon(\phi_2)$$

$$M_4(\phi_1, \phi_2) = \ (1 - H_\varepsilon(\phi_1)) \ (1 - H_\varepsilon(\phi_2))$$

For the multiphase local-based hybrid level set, including the two-phase local-based hybrid level set, the parameters are set empirically depending on the properties of the images to be segmented, including the type of images for the degree of intensity inhomogeneity (CT, MRI or other) and the minimum inter-gap distance of the anatomical bone region to be segmented (ankle, forefoot, hip, shoulder, and the like).

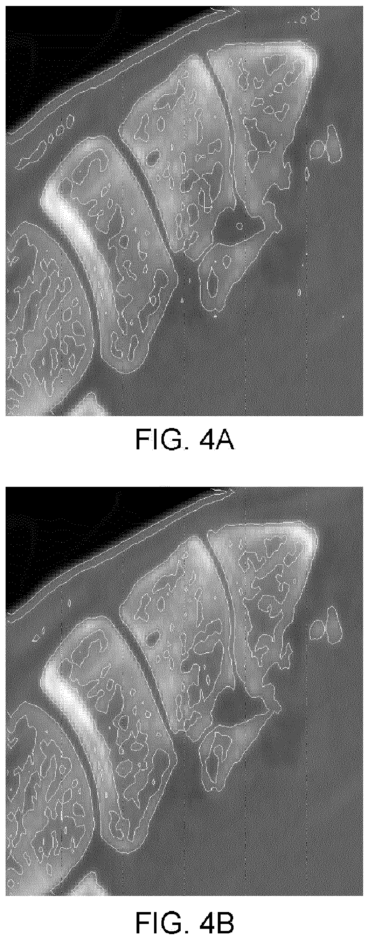

In order to compare the proposed multiphase local-based hybrid level set with the region-based level set described in "C. Li, R. Huang, Z. Ding, C. Gatenby, D. N. Metaxas, and J. C. Gore, A Level Set Method for Image Segmentation in the Presence of Intensity Inhomogeneities with Application to MRI, IEEE Trans. Image Processing, vol. 20 (7), pp. 2007-2016, 2011", the parameters were chosen so as to get almost similar foreground (i.e. bones) and background results. Figure 4A shows the contour of the segmented blobs resulting from the region-based level set described in Li et al. (2011) applied on the original greyscale image. Figure 4B shows the contour of the segmented blobs resulting from the multiphase local-based hybrid level set, described above, applied on the same original greyscale image. Experiments showed that hybrid-based level set processing time (Figure 4B) is one third of the region-based level set processing time (Figure 4A). Furthermore, the multiphase local-based hybrid level set produced segmented images with less background noise. This result is interesting for noisy images with high degree of intensity inhomogeneities like CT or MRI images and for images which need local-based segmentation requiring small scale parameter like images characterized by close bones.

As mentioned above, region-based level sets with small scale parameter and edge-based level sets are sensible to the initialization. As the proposed multiphase local-based hybrid level set operates with those two properties, it is also sensible to the initialization, as shown in Figures 7A to 7E, described in further details below. As mentioned above, the initialization should be close to the anatomical bone boundaries. Thus, each binary mask, obtained from the 3D adaptive thresholding processing, is used for the initialisation of the level set on each grayscale ROI. These binary masks have contours close to the anatomical bone boundaries.

Figures 7A to 7E show the influence of the initialization of the multiphase local-based hybrid level set on the bone segmentation results. In the embodiment shown, the multiphase is two-phases: (a) the bones as foreground and (b) the background. Figure 7A and Figure 7B show the initialization of the multiphase local-based hybrid level set by an arbitrary rectangular contour and a mask respectively. Figure 7C shows the segmentation results with the arbitrary rectangular contour shown in Figure 7A and Figure 7D shows the results with a mask shown in Figure 7B. Both segmentations shown in Figures 7C and 7D have been obtained with the same set of parameters including the same iteration number. Figure 7D shows that, with the same set of parameters, the initialization by the binary mask is more effective than with an arbitrary rectangular initialization. More particularly, all contours are closed and the background is almost noise free. Figure 7E shows the results of the multiphase local-based hybrid level set with an arbitrary rectangular as initialization, similar to Figure 7A. For this segmentation, the number of iterations had to be increased in order to obtain almost the same foreground as for Figure 7D. Therefore, the processing time was more than three times longer than with mask initialization. Furthermore, the resulting contours are less closed with a higher background noise than for the segmentation result shown in Figure 7D.

Thus, the sensitivity of the multiphase local-based hybrid level set to initial conditions due to a choice of a small value of scale parameter can be resolved by initializing the multiphase local-based hybrid level set by a contour close to anatomical bone boundaries, i.e. the boundaries of object to be segmented. Furthermore, the sensitivity of the edge terms of the multiphase local-based hybrid level set to initial conditions can also be resolved by initializing the multiphase local-based hybrid level set by a contour close to the anatomical bone boundaries.

In the following, the segmented blobs obtained by the multiphase local-based hybrid level set segmentation 50b are referred to as original (or unmasked) blobs. To discard remaining background noise, a blob masking validation step 50c is carried out on each of these original blobs in order to determine the final segmented blob to be retained. More particularly, the binary masks, obtained with the 3D adaptive thresholding processing 22, are applied to the original (or unmasked) blobs, obtained following the multiphase local-based hybrid level set segmentation 50b. Thus, by masking the resulting binary subimages from the segmentation with the thresholded blobs, the background noise is substantially eliminated. Then, for each remaining blobs in the masked binary subimage, a blob matching with the unmasked blobs in the binary subimage, obtained following the segmentation, is carried out by means of blob labelling and area comparison. Only blobs which have a matching pair between masked and unmasked binary subimages are considered. Once each blob in the masked binary subimage is paired with a corresponding unmasked blob, the computation and the comparison of their perceptual grouping properties are determined and compared (Figure 6A). In an embodiment, the perceptual grouping properties can include the smoothness, continuity, closure and solidity of a blob. A blob resulting from a proper segmentation should have a regular and smooth contour as acknowledged in Gestalt theories (smoothness, closure, solidity and good continuation).

For each pair of corresponding blobs, the blob having the highest perceptual grouping properties is retained as the final segmented blob for the following steps. For instance, if the smoothness of an unmasked (original) blob is higher than the smoothness of the corresponding masked blob, the original unmasked blob is selected as the final segmented blob, otherwise, the masked blob is retained as the final segmented blob.

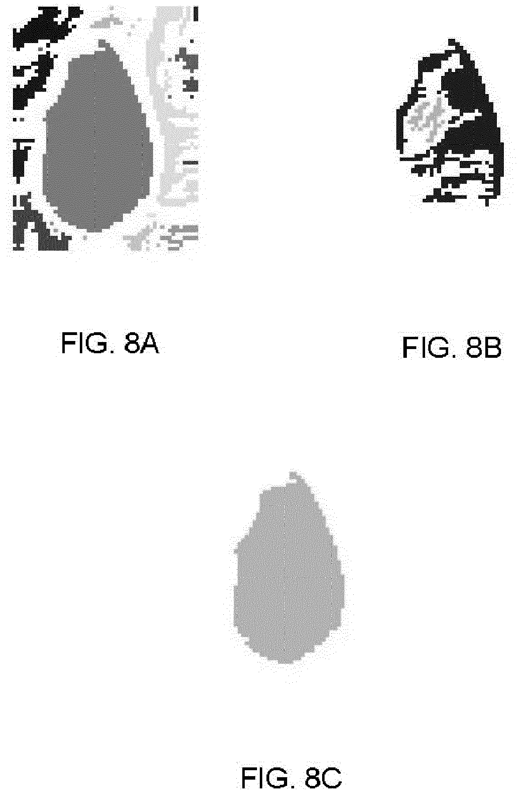

Figure 8A shows the unmasked (original) blobs resulting from the multiphase local-based hybrid level set segmentation 50b where each one of the unmasked blob is labeled by a different grey tone. The blob masking 50c is then applied to this binary subimage in order to discard remaining background noise. Figure 8B shows the same binary subimage following blob masking, i.e. the masked blobs. By visually comparing Figures 8A and 8B, for this particular blob, there is shown that the blob masking deteriorates the blob. Perceptual grouping properties are then computed for the masked blob (Figure 8b) and for the corresponding unmasked (or original) blob (Figure 8A). As expected from the visual comparison, the perceptual grouping properties of the unmasked blob (Figure 8A) are higher than those of the masked blob (Figure 8B), the unmasked blob is retained as the final segmented blob. The final segmented blob is shown in Figure 8C. More particularly, Figure 8C shows the final noise free background binary subimage with the selected segmented blob as stated in 50d.

Then, referring back to Figure 6, in step 50d, a first set of secondary segmented imaging data including a plurality of binary images are generated. The first set of secondary images includes the final segmented blobs, i.e. the blobs following the blob masking validation 50C. It includes a combination of masked blobs and unmasked (original) blobs, i.e. the ones having the highest perceptual grouping properties.

Using the first set of secondary segmented imaging data, in step 50e, a first 3D volume is generated by stacking all secondary binary images obtained from step 50d. A 3D connected component analysis is applied to this 3D binary volume in order to get connected 3D binary subvolumes. The first 3D volume is stored in a memory of a processing unit performing the method or any other suitable support accessible by the processing unit for further use, as will be described in more details below.

It happens that two or more too close neighboring bones may not be separated through the multiphase local-based hybrid level set segmentation due to extremely narrow or non-existent gap between them. When two or more too close neighboring bones may not be separated through the multiphase local-based hybrid level set segmentation, a subsequent 2D bone separation 52 may then be performed, as will be described in further details in reference to Figure 6A.

The 2D blob separation step is an optional step performed on the first set of secondary binary images in step 52 to generate a second 3D volume in step 54, as will be described in more details below.

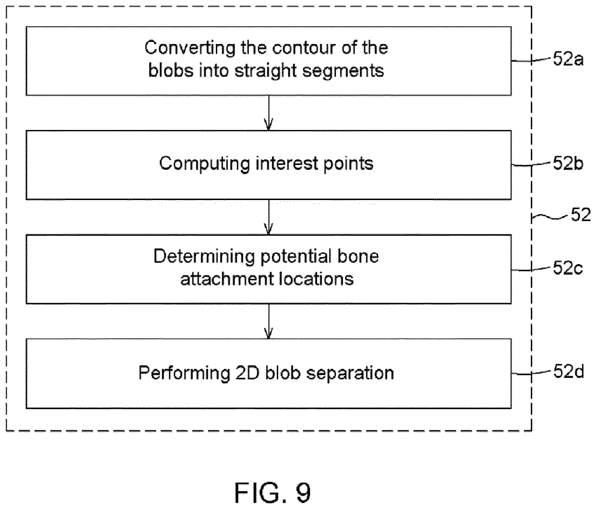

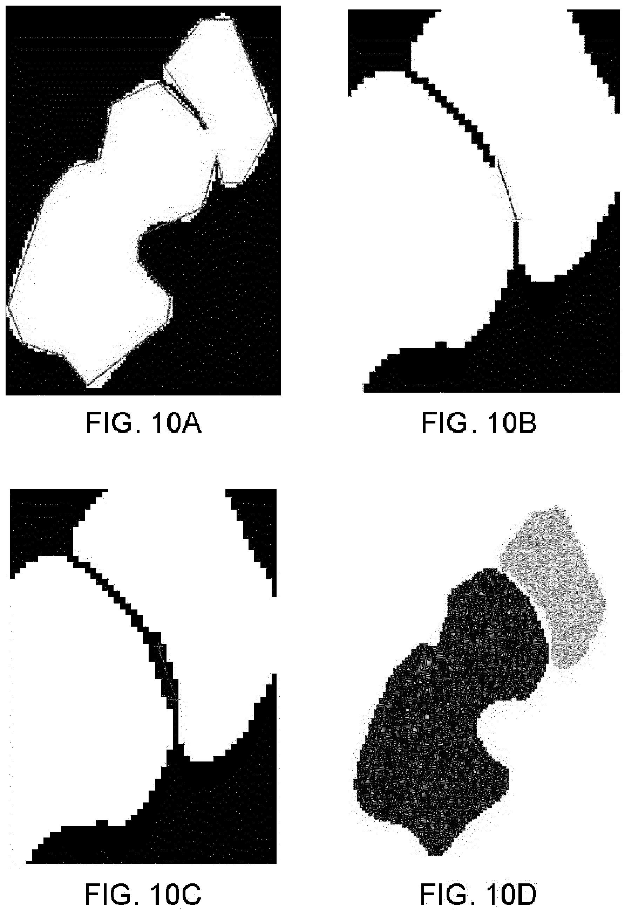

Step 52 is described in further details in reference to Figures 9 and 10. For each one of the binary images of the first set of secondary segmented imaging data, the contour of the segmented blobs, either the unmasked (original) blobs or the masked blobs, are converted into straight segments in step 52a as shown in Figure 10A. More particularly, straight segments are created from the contours of the blobs. In Figure 10A, the segmented blob shows that two bones are attached to each other. In fact, the talus bone and the navicular bone are attached following the multiphase local-based hybrid level set segmentation, at least because the segmented blob in this 2D binary subimage belongs to the two bones. Then, interest points are computed in step 52b. Interest points are identified based on a relevance measure ($K_{relevance}$) proposed by Latecki *et al.* "L. J. Latecki, R. Lakämper, Convexity Rule for Shape Decomposition Based on Discrete Contour Evolution, Computer Vision and Image Understanding (CVIU), vol. 73, pp. 441-454, 1999." based on the angle between two consecutive straight segments ($s_1$, $s_2$) and their lengths.

$$K_{relevance} = \frac{\beta(s_1, s_2)\, l(s_1)\, l(s_2)}{l(s_1) + l(s_2)}$$

$\beta$: angle between two consecutive segments $s_1$ and $s_2$

l($s_1$) and l($s_2$): lengths of two consecutive segments

Then, using the computed interest points, locations for bone attachments are determined in step 52c. The interest points relevance measures are compared to a predetermined relevance threshold and the interest points meeting the predetermined relevance threshold are determined as being a bone attachment location. For each one of the bone attachment location, erosion will be carried out, as will be described in more details below.

Then, the interest points identified as being a bone attachment location are grouped in pairs and the distance separating two interest points of a pair is computed as shown in Figure 10B wherein two interest points are joined by a line. Then, the computed distance is compared to a predetermined distance threshold. If the computed distance meets the predetermined distance threshold, i.e. for instance, if the computed distance is smaller than the predetermined distance threshold, the pair of interest points is determined as defining a linear bone attachment location. The other ones of the interest points identified as being a potential bone attachment are identified as being a punctual potential bone attachment location.

Finally, in step 52d, for the bone attachment line(s) and point(s) determined in step 52c, a 2D blob separation is carried out. For a bone attachment line defined by a pair of interest points, a local rectangular erosion along the line linking the two points of interest is performed in order to separate the two potentially attached bones as shown in Figure 10C. The erosion should be local to erode only the area wherein the two bones are attached. To perform a local erosion, a local mask, different from the binary masks obtained with the 3D adaptive thresholding processing 22, is applied to the 2D image along the bone attachment line in order to define a local neighborhood. In Figure 10C, the local erosion was performed with a rectangular structuring element. The parameters of the structuring element for performing the local erosion and the local mask are defined based on the position, the distance and the angle defined by the pair of interest points. More specifically, the dimension and the orientation of the rectangular structuring element are defined by means of the location of the interest points. Figure 10D shows the blobs resulting from the second 2D blob separation 52, i.e. wherein the talus bone and the navicular bone are segmented.

When bone attachment location is a bone attachment point (i.e. a punctual bone attachment location) defined by a single point of interest, i.e. two neighboring bones are attached to each other by one pixel, a local erosion with a square structural element is applied.

The above-described 2D blob separation is designed to be efficient when applied within a binary subimage in sagittal view where two bones are attached to each other, such as in the configuration on Figure 10A.

Referring back to Figure 7, following the 2D blob separation step 52, a second set of secondary segmented imaging data is obtained including a plurality of 2D binary images. Using the second set of secondary segmented imaging data, in step 54, a second 3D volume is generated by stacking all binary images obtained from step 52. The second 3D volume is stored in a memory of a processing unit performing the method or any other suitable support accessible by the processing unit for further use, as will be described in more details below.

Even though in the embodiment described below, the 2D blob separation is performed following a multiphase local-based hybrid segmentation, it is appreciated that it can be performed after any other suitable segmentation.

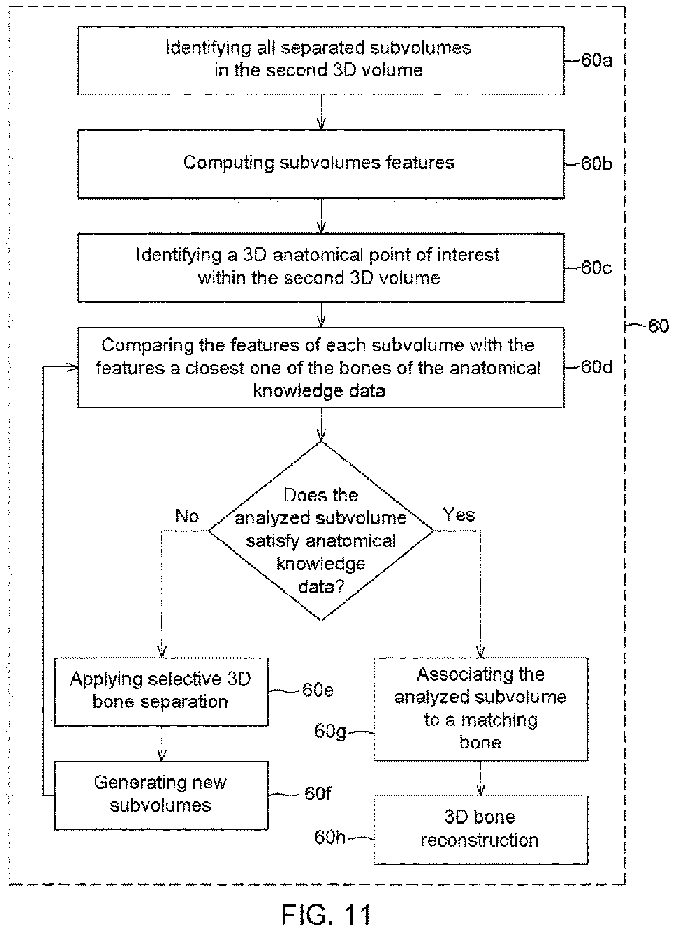

Now referring to Figure 11, a further step of the method 10 includes the identification of anatomical components 60, such as the bones, in the second 3D volume, i.e. the one obtained following step 52, using anatomical knowledge data relative to the section of the body structure of the corresponding imaging data.

In an embodiment, the step of identification of anatomical components 60 is performed based on anatomical knowledge data relative to the section of the body structure being analyzed, such as a foot, a hand, an ankle, a hip or the like. For example and without being limitative, the anatomical knowledge data can be stored in an anatomical knowledge data file, in a memory of a processing unit performing the method or any other suitable support accessible by the processing unit. The anatomical knowledge data includes general information regarding the specific body structure and geometry thereof, such as ranges of the relative lengths and volumes of the bones of the body structure, distances between the adjacent bones and the like. One skilled in the art will therefore understand that, in an embodiment, the anatomical knowledge data includes data relative to a plurality of body structures including bones which can be segmented using the present method, the appropriate body structure being selected according to the body structure being analyzed.

For identifying the anatomical components, the first step (step 60a) includes identifying in the second 3D volume, all separated 3D subvolumes by 3D connected component analysis. A subvolume corresponds to a respective one of the blobs, identified in the 2D binary images, combined with adjacent and corresponding ones of the blobs of other images in the 3D volume. Then, the features of the subvolumes are computed in step 60b. For instance and without being limitative, these features include the volume, length, 3D centroid, bounding box, and extreme 3D points.

A point of anatomical interest is then identified in the second 3D volume in step 60c. A point of anatomical interest can include, for example, the tip of the big toe for foot bone identification.

For each one of the subvolumes, starting from the point of anatomical interest, the features of the analyzed subvolume are compared to the features of the anatomical knowledge data in step 60d. The anatomical knowledge data include the features of each one of the bones that are included in the 3D volume being analyzed. More particularly, from the anatomical point of interest, a first one of the subvolumes is analyzed to be associated with one of the bones according to the anatomical knowledge data. This is achieved by proximity criteria and other anatomical features which can include and are not limited to extremity 3D points, centroid, length, volume, and axes. First, a closest one of the bones in the anatomical knowledge data is identified by proximity criteria. If the features of the subvolume being analyzed substantially correspond to the features of the anatomical knowledge data associated with the identified closest bone, the analyzed subvolume is associated to the respective bone (step 60g), i.e. the matching bone. For instance, if the features of the subvolume being analyzed substantially correspond to the features of the identified closest bone stored in the anatomical knowledge data, the subvolume is associated to the respective bone having substantially corresponding features.

In an embodiment, the bone identification processing is performed sequentially by proximity to a last one of associated 3D subvolumes, starting from the 3D subvolume closest to the 3D anatomical point of interest.

For example and without being limitative, if the body structure is a foot including a metatarsus, the anatomical knowledge data can include information such as its length. For instance, a mean length of a metatarsus can be about 6 cm (this value is determined *a priori* using anatomical statistical data or by supervised learning). If the identified closest bone for a subvolume to be identified is the metatarsus, a length of the subvolume is compared to the length of metatarsus stored in the anatomical knowledge data. If the subvolume to be identified has a 20 cm length, it is not associated to a metatarsus. As mentioned above, it is appreciated that the comparison criteria can be based on other features of the anatomical knowledge data than a length of the bone.

Then, if the features of the subvolume being analyzed do not correspond to the features of the identified closest one of the bones as described in the anatomical knowledge data and as exemplified above, a selective 3D bone separation step is performed in step 60e. Several criteria based on 3D features of the subvolume are evaluated before applying the selective 3D bone separation. For instance, the 3D bone separation can be carried out based on a ratio of the volume of the 3D blob and the volume of the bounding box including the 3D blob, i.e. a 3D solidity test is carried out. If the ratio is smaller than a bone separation threshold, the 3D bone separation is performed. It was found that attached and sparse 3D blobs, such as two attached metatarsus do not have a high "3D solidity" property, i.e. the ratio of the volume of the 3D blob and the volume of the bounding box including the 3D blob is relatively low. The criteria can also be based on the blob volume. The selective 3D bone separation is performed by a set of 3D morphological operations which may include 3D morphological erosion, opening, dilation and closing.

Following the selective 3D bone separation, new 3D subvolumes are generated in step 60f and the new 3D subvolumes are then sequentially compared to features of the anatomical knowledge data in step 60d. Once again, if the features of the subvolume being analyzed substantially correspond to the features of the anatomical knowledge data associated to an identified closest one of the bones, the subvolume being analyzed is associated to the respective bone (step 60g). Otherwise, a selective 3D bone separation step (step 60e) is performed as detailed above. The bone identification sequence can vary and be based on the body structure being modelized.

For each one of the subvolumes being associated to a respective bone, the 3D bone is reconstructed by a set of morphological operations including a morphological reconstruction in step 60h. These operations take into account the respective bone and the first 3D volume in order to restore accurately the original size and shape of the respective bone. This reconstruction step is performed since several morphological operations have been applied to each original binary image after the level set segmentation, including 2D and 3D bone separation.

Once the particular subvolume is associated to a respective one of the bones (step 60g) and reconstructed (step 60h), the particular subvolume is substracted from the second 3D volume. Successive bone searching and identification are performed if more than one bone is to be segmented. More particularly, successive bone searching and identification are performed for each one of the subvolumes of the second 3D volume.

Once all subvolumes have been associated to a bone of the bone structure and reconstructed, tertiary segmented image data are obtained. 3D models of the bones can be generated from the tertiary segmented image data. For instance, the software Geomagic™ can be used to create 3D bone models using 3D point clouds. The resulting 3D bone model, in which each one of the bones is identified, can be used in any subsequent task, such as for example the design of a cutting guide or an implant for a specific bone of the body structure or a joint thereof.

The designed cutting guide or/or implant can be manufactured with known methods such as and without being limitative 3D printing, laser sintering, molding, machining, or a combination thereof.

One skilled in the art will understand that, in an embodiment, a system for performing the multi-bone segmentation in imaging data, as described above, is also provided. The system includes a processing device with a processor coupled to a memory. The processing device includes an image preprocessing module, a multi-bone segmentation module including a multiphase local-based hybrid level set segmentation sub-module, and an anatomical component identification module stored on the memory and executable by the processor of the processing device. These modules interact together in order to provide the tertiary segmentation data from the imaging data.

The processing device is adapted to receive imaging data from an imaging apparatus (not shown), such as a CT scanner (or a processing device connected to the imaging apparatus), for example through a network, via a data storage device, or the like, and process the imaging data using the above mentioned modules in order to generate the tertiary segmentation data which can be used as data for generating the three-dimensional model.

For example, in an embodiment, the imaging data are received by the image preprocessing module and processed in accordance with the steps of the method described above and the flowcharts of Figures 2A and 2B, in order to generate the primary image data. The primary image data are received by the multi-bone segmentation module and are processed in accordance with the steps of the method described above in order to generate the secondary segmented data. The secondary segmented data are subsequently received by the anatomical component identification module and are processed according to the above described steps of the method and the flowcharts of Figure 11 in order to associate each one of the subvolumes to a respective one of the bones and generate the tertiary segmented image data.

Several alternative embodiments and examples have been described and illustrated herein. The embodiments of the invention described above are intended to be exemplary only. A person skilled in the art would appreciate the features of the individual embodiments, and the possible combinations and variations of the components. A person skilled in the art would further appreciate that any of the embodiments could be provided in any combination with the other embodiments disclosed herein. The present examples and embodiments, therefore, are to be considered in all respects as illustrative and not restrictive, and the invention is not to be limited to the details given herein. Accordingly, while specific embodiments have been illustrated and described, numerous modifications come to mind without significantly departing from the scope of the invention as defined in the appended claims.

**Claims**

1. A computer implemented method for performing bone segmentation in imaging data of a section of a body structure, the method comprising:

   Obtaining the imaging data (12) including a plurality of 2D images of the section of the body structure;
   Performing a multiphase local-based hybrid level set segmentation (50) to obtain a plurality of segmented blobs on at least a subset of the plurality of 2D images by minimizing an energy functional including a local-based edge term and a local-based region term computed locally inside a local neighborhood centered at each pixel of each one of the 2D images on which the multiphase local-based hybrid level set segmentation is performed, the local neighborhood being defined by a Gaussian kernel whose size is determined by a scale parameter $\sigma$;
   Generating a 3D volume (50e, 54) including a plurality of 3D subvolumes from the segmented blobs; and
   Associating an anatomical component to each one of the 3D subvolumes using anatomical knowledge data relative to the section of the body structure of the imaging data (60) and identifying bones defined by the subvolumes.

2. The computer implemented method of claim 1, wherein the local neighborhood is circular and performing the multiphase local-based hybrid level set segmentation further comprises: for each pixel of the 2D images, dynamically changing region descriptors based on a position of a center of the local neighborhood.

3. The computer implemented method of one of claims 1 and 2, wherein the 2D images include two phases and the energy functional is:

$$\mathcal{F}_{2\text{-phase}}(\phi, c, b) = (1 - \lambda)\mathcal{E}_{region}(\phi, c, b) + \lambda\mathcal{E}_{edge}(\phi) + \mu\mathcal{R}_{p}(\phi)$$

   where $\lambda$ is greater than or equal to 0 and smaller than or equal to 1, $\mu$ is a positive constant, $b$ is a bias field accounting for intensity inhomogeneity, $\Phi$ is a vector formed by two level set functions $\Phi_i$, i=1, 2 for the two phases, and $c$ is a vector representing intensity-based constant values in disjoint regions,

$$\mathcal{E}_{edge}(\phi) = v\mathcal{L}_g(\phi) + \alpha\mathcal{A}_g(\phi)$$

   wherein $v$ and $\alpha$ are normalization constants,

$$\mathcal{L}_g(\phi) \triangleq \int g_{\sigma, \tau}\, \delta_{\epsilon}(\phi)|\nabla\phi|d\mathbf{x}$$

,

$$\mathcal{A}_g(\phi) \triangleq \int g_{\sigma,\tau} \mathcal{H}_\varepsilon(-\phi)dx ,$$

$$g_{\sigma,\tau} \triangleq \frac{1}{1+f_{\sigma,\tau}},$$

$$f_{\sigma,\tau}(x) = \int K_\sigma(y-x)u_\tau(y)dy ,$$

$$u_\tau \triangleq |\nabla G_\tau * I|^2$$

with $G_\tau$ being a Gaussian kernel with a standard definition $\tau$ and $I$ being the image, $K_\sigma$ a kernel function computed by means of a truncated Gaussian function of the scale parameter ($\sigma$), $\rho$ being the radius of the local circular neighborhood:

$$K_\sigma(u) = \begin{cases} \dfrac{1}{a} e^{-|u|^2/2\sigma^2}, & |u| \leq \rho \\ 0, & otherwise \end{cases}$$

and

$$H_\varepsilon(\phi) = \frac{1}{2}\left[1 + \frac{2}{\pi} \arctan\left(\frac{\phi}{\varepsilon}\right)\right]$$

with $\varepsilon$ being a parameter; and

$$\mathcal{E}_{region}(\phi, c, b) = \int \left(\sum_{i=1}^{N} (\int K_\sigma(y-x)|I(x) - b(y)c_i|^2 dy)\mathcal{M}_i(\phi(x))\right)dx$$

$\mathcal{M}_i$ is a membership function of each region $\Omega_i$, and is defined as:

$$\mathcal{M}_1(\phi) = \mathcal{H}_\varepsilon(\phi)$$

$$\mathcal{M}_2(\phi) = 1 - \mathcal{H}_\varepsilon(\phi)$$

wherein $\mathcal{R}_p$ is a regularisation term:

$$\mathcal{R}_p(\phi) = \int p(|\nabla\phi|)dx$$

and the minimization of the hybrid energy functional $\mathcal{F}$ is carried out by gradient descent method:

$$\frac{\partial \phi}{\partial t} = - \frac{\partial F_{2\_phase}}{\partial \phi}$$

4. The computer implemented method of one of claims 1 and 2, wherein the energy functional is:

$$\mathcal{F}_{multiphase}(\Phi, c, b) = (1 - \lambda)\mathcal{E}_{region}(\Phi, c, b) + \lambda \mathcal{E}_{edge}(\Phi) + \mu \mathcal{R}_p(\Phi)$$

where $\lambda$ is greater than or equal to 0 and smaller than or equal to 1, $\mu$ is a positive constant, b is a bias field accounting for intensity inhomogeneity, c is a vector representing intensity-based constant values in disjoint regions, and $\Phi$ is a vector formed by k level set functions $\Phi i$, i=1...k for k regions or phases;

$$\Phi = (\phi_1(\mathbf{y}), ..., \phi_k(\mathbf{y}))$$

and a number of the level set functions to be used is at least equal to:

$$k = log_2(N)$$

where $log_2$ is the logarithm to the base 2 and N is the number of the regions to be segmented in the image.

$$\mathcal{E}_{region}(\Phi, c, b) = \int \sum_{i=1}^{N} e_i(\mathbf{x}) M_i(\Phi) \mathbf{x})) d\mathbf{x}$$

With:

$$e_i(\mathbf{x}) = \int K_\sigma |I(\mathbf{x}) - b(\mathbf{y}) c_i|^2 \, d\mathbf{y}, \quad i=1, ..., k$$

with $K_\sigma$ a kernel function computed by means of a truncated Gaussian function of standard deviation $\sigma$, referred to as the scale parameter,

$\mathcal{M}_i$ is a membership function of each region $\Omega_i$, and is defined as:

$$M_i(\Phi) = M_i(\phi_1(\mathbf{y}), ..., \phi_k(\mathbf{y})) = \begin{cases} 1, & \mathbf{y} \in \Omega_i \\ 0, & else \end{cases}$$

$$\mathcal{E}_{edge}(\Phi) = v \mathcal{L}_g(\Phi) + \alpha \mathcal{A}_g(\Phi)$$

Where:

$$\mathcal{L}_g(\Phi) = \sum_{j=1}^{k} \mathcal{L}_g(\phi_j)$$

$$\mathcal{A}_g(\Phi) = \sum_{j=1}^{k} \mathcal{A}_g(\phi_j)$$

wherein $v$ and $\alpha$ are normalization constants,

With $\mathcal{L}_g(\phi_j)$ and $\mathcal{A}_g(\phi_j)$ being new local-based edge terms:

$$\mathcal{L}_g(\phi) \triangleq \int g_{\sigma,\tau}\, \delta_\varepsilon(\phi)|\nabla\phi|d\mathbf{x} \quad ,$$

$$\mathcal{A}_g(\phi) \triangleq \int g_{\sigma,\tau}\, \mathcal{H}_\varepsilon(-\phi)d\mathbf{x} \quad ,$$

$$g_{\sigma,\tau} \triangleq \frac{1}{1+f_{\sigma,\tau}} ,$$

$$f_{\sigma,\tau}(\mathbf{x}) = \int K_\sigma(\mathbf{y}-\mathbf{x})u_\tau(\mathbf{y})d\mathbf{y} \quad ,$$

$$u_\tau \triangleq |\nabla G_\tau * I|^2$$

with $G_\tau$ being a Gaussian kernel with a standard definition $\tau$ and $I$ being the image, $K_\sigma$ a kernel function computed by means of a truncated Gaussian function of the scale parameter ($\sigma$), $\rho$ being the radius of the local circular neighborhood:

$$K_\sigma(u) = \begin{cases} \dfrac{1}{a} e^{-|u|^2/2\sigma^2}, & |u| \le \rho \\ 0, & otherwise \end{cases}$$

and

$$H_\varepsilon(\phi) = \frac{1}{2}\left[1 + \frac{2}{\pi}\arctan\left(\frac{\phi}{\varepsilon}\right)\right]$$

with $\varepsilon$ being a parameter,

wherein $\mathcal{R}_p$ is a regularisation term:

$$\mathcal{R}_p(\phi) = \int p(|\nabla\phi|)dx$$

and the minimization of the multiphase hybrid energy functional $\mathcal{F}_{multiphase}$ by gradient descent method:

$$\frac{\partial\phi_1}{\partial t} = -\frac{\partial F_{multiphase}(\Phi)}{\partial\phi_1}, \dots, \quad \frac{\partial\phi_k}{\partial t} = -\frac{\partial F_{multiphase}(\Phi)}{\partial\phi_k} .$$

5. The computer implemented method as claimed in any one of claims 1 to 4, wherein the body structure includes a plurality of bones and the method is performed using anatomical knowledge data relative to the body section of the body structure of the imaging data, the method further comprising:

Generating primary image data from the imaging data using an image preprocessing including identifying regions of interest ROIs in the 2D images (20); and
Wherein performing the multiphase local-based hybrid level set segmentation on at least a subset of the plurality of 2D images comprises performing the multiphase local-based hybrid level set segmentation on the regions of interest ROIs and generating secondary segmented image data including a plurality of 2D binary images with segmented blobs.

6. The computer implemented method of claim 5, wherein the plurality of 2D images are greyscale images and the image preprocessing further comprises performing a 3D adaptive thresholding processing (22) to define thresholded blobs in the 2D images and generating binary masks from the thresholded blobs obtained by the 3D adaptive thresholding processing, wherein the 3D adaptive thresholding processing includes the steps of:

For at least a sample of the plurality of 2D greyscale images:

Dividing each one of the 2D greyscale images of at least the sample in a plurality of sections (22a);
Computing a local pixel intensity section threshold for each one of the sections (22b);
Computing a global image pixel intensity threshold for each one of the 2D greyscale images of at least the sample using the local pixel intensity section thresholds computed for each one of the sections (22d);
Computing a global volume pixel intensity threshold using the global image pixel intensity thresholds; and

Applying the global volume pixel intensity threshold to each one of the 2D greyscale images of the plurality of 2D greyscale images (22e).

7. The computer implemented method of claim 6, wherein the global image pixel intensity threshold for each one of the 2D greyscale images of at least the sample is computed as a maximum of the local pixel intensity section thresholds for the corresponding image; and the global volume pixel intensity threshold from the global image pixel intensity thresholds is computed as a mean of the global image pixel intensity thresholds minus 1.5 times a standard deviation of the global image pixel intensity thresholds.

8. The computer implemented method of one of claims 6 and 7, wherein the image preprocessing comprises computing thresholded blobs in the images following the 3D adaptive thresholding processing and creating binary masks from the thresholded blobs; and wherein identifying regions of interest ROIs in the 2D images comprises selecting regions in the 2D greyscale images of the imaging data including at least one of the a respective one of the thresholded blobs and a respective one of the binary masks generated from the thresholded blobs.

9. The computer implemented method of claim 8, wherein generating secondary segmented image data comprises performing a blob masking validation (50c) following the multiphase local-based hybrid level set segmentation, the multiphase local-based hybrid level set segmentation generating a plurality of unmasked blobs, and wherein the blob masking validation comprises:

Applying the binary masks to the unmasked blobs to obtain masked blobs;
Comparing the at least one perceptual grouping property of the masked blob to the at least one perceptual grouping property of the corresponding one of unmasked blobs; and
Selecting the one of the masked blob and the corresponding one of unmasked blobs having the highest perceptual grouping property as the segmented blob of the secondary segmented image data.

10. The computer implemented method of one of claims 8 and 9, further comprising initializing the multiphase local-based hybrid level set segmentation with the binary masks and wherein performing the multiphase local-based hybrid level set segmentation on the regions of interest ROIs comprises generating binary subimages including the segmented blobs and the method further comprises merging the binary subimages to generate a respective one of the 2D binary images including the segmented blobs.

11. The computer implemented method of any one of claims 5 to 10, wherein the image preprocessing further comprises:

Determining an initial image including at least one region of interest and determining a final image including at least one region of interest; and
Selecting a subset of 2D images including the initial image, the final image, and the images extending therebetween, wherein the primary image data consists of the subset of 2D images including the regions of interest ROIs.

12. The computer implemented method of any one of claims 5 to 11, wherein identifying anatomical components in the 3D volume comprises:

Computing at least one subvolume feature for each one of the 3D subvolumes;

For each one of the 3D subvolumes, carrying out a bone identification processing comprising:

Identifying a closest one of the bones and comparing the at least one subvolume feature to features of the anatomical knowledge data corresponding to the closest one of the bones;

If the at least one subvolume feature for the respective one of the 3D subvolumes substantially corresponds to the features of the anatomical knowledge data for the closest one of the bones, associating the respective one of the 3D subvolumes to the closest one of the bones;

Otherwise, applying a selective 3D bone separation to the respective one of the 3D subvolumes and generating new 3D subvolumes.

13. The computer implemented method of claim 12, wherein identifying anatomical components in the 3D volume further comprises:

Identifying a 3D anatomical point of interest within the 3D volume;

Identifying a 3D subvolume closest to the 3D anatomical point of interest; and

Performing sequentially the bone identification processing by proximity to a last one of associated 3D subvolumes, starting from the 3D subvolume closest to the 3D anatomical point of interest.

14. The computer implemented method of one of claims 12 and 13, wherein the 3D volume generated from the 2D binary images of the secondary segmented image data is a first 3D volume and the method further comprises:

Carrying out a 2D blob separation on the secondary segmented image data and generating a second 3D volume by stacking binary images obtained following the 2D blob separation; and

wherein identifying anatomical components is performed on the second 3D volume; and

wherein carrying out a 2D blob separation comprises:

For each one of the segmented blobs of the secondary segmented image data:

Creating straight segments from the contours of the respective one of the segmented blobs;

Identifying points of interest using the straight segments;

If there is at least one point of interest, identifying at least one bone attachment location close to the at least one point of interest; and separating the respective one of the segmented blobs by local morphological erosion along the at least one bone attachment location.

15. The computer implemented method of claim 14, wherein identifying points of interest using the straight segments comprises:

"Determining a length of the straight segments and an angle between consecutive ones of the straight segments, the consecutive one of the straight segments sharing a common point;

For each pair of consecutive straight segments $s_1$, $s_2$, computing a relevance measure ($K_{relevance}$):

$$K_{relevance} = \frac{\beta(s_1, s_2) l(s_1) l(s_2)}{l(s_1) + l(s_2)}$$

wherein $\beta(s_1, s_2)$ is the angle between the consecutive straight segments $s_1$ and $s_2$;

$l(s_1)$ and $l(s_2)$ are lengths of the consecutive straight segments $s_1$ and $s_2$ respectively;

Comparing the computed relevance measure to a predetermined threshold; and

If the computed relevance measure meets the predetermined relevance threshold, identifying the common point as being a point of interest.

16. The computer implemented method of claim 15, wherein identifying at least one bone attachment location close to the at least one point of interest comprises:

Identifying if a respective one of the points of interest belongs to a linear bone attachment location defined by a pair of points of interest; and, for each identified linear bone attachment location, separating the respective one of the segmented blobs comprises performing a linear local morphological erosion along a line extending between the points of interest defining the linear bone attachment location;

otherwise, identifying the respective one of the points of interest as a punctual bone attachment location and separating the respective one of the segmented blobs comprises performing local morphological erosion around the punctual bone attachment location; and

wherein identifying a pair of points of interest comprises: for each potential pair of points of interest, grouping the points of interest in a pair and computing a distance separating two grouped points of the pair, comparing the computed distance to a predetermined distance threshold; and if the computed distance meets the predetermined distance threshold, associating the potential pair of interest points as being one linear bone attachment location.

17. A system for generating segmentation data segmentation from imaging data of at least a section of a body structure including a plurality of bones using anatomical knowledge data relative to the section of the body structure of the imaging data, the system comprising:

a processing unit having a processor and a memory;

an image preprocessing module stored on the memory and executable by the processor, the image preprocessing module having program code that when executed, generates primary image data from the imaging data using an image preprocessing process, the primary image data including regions of interest in images of the imaging data;

a multi-bone segmentation module stored on the memory and executable by the processor, the multi-bone segmentation module having a program code that when executed, generates a 3D volume by performing a multiphase local-based hybrid level set segmentation to obtain a plurality of segmented blobs and combining the segmented blobs to obtain the 3D volume including a plurality of 3D subvolumes, the multiphase local-based hybrid level set segmentation being carried out on each one of on the regions of interest ROIs by minimizing an energy functional including a local-based edge term and a local-based region term computed locally inside a local neighborhood centered at each point of a respective one of the regions of interest ROIs, the local neighborhood being defined by a Gaussian kernel whose size is determined by a scale parameter $\sigma$ and generating a 3D volume following the multiphase local-based hybrid level set segmentation; and

an anatomical component identification module stored on the memory and executable by the processor, the anatomical component identification module having a program code that, when executed, generates tertiary segmented imaging data through identification of the subvolumes defined in the 3D volume and identification of bones defined by the subvolumes.

**Patentansprüche**

1. Computerimplementiertes Verfahren zum Durchführen einer Knochensegmentierung in Bilddaten eines Abschnitts einer Körperstruktur, wobei das Verfahren umfasst:

Erhalten der Bilddaten (12), die eine Vielzahl von 2D-Bildern des Abschnitts der Körperstruktur beinhalten, Durchführen einer mehrphasigen, lokal basierten Hybrid-Level-Set-Segmentierung (50) auf mindestens einer Teilmenge der Vielzahl von 2D-Bildern, um eine Vielzahl von segmentiert Blobs zu erhalten, durch Minimieren eines Energiefunktionals, das einen lokal basierten Kantenterm und einen lokal basierten Regionsterm beinhaltet und lokal innerhalb einer lokalen Nachbarschaft berechnet wird, die bei jedem Pixel jedes der 2D-Bilder zentriert ist, auf dem die mehrphasige, lokal basierte Hybrid-Level-Set-Segmentierung durchgeführt wird, wobei die lokale Nachbarschaft durch einen Gaußschen Kernel definiert ist, dessen Größe durch einen Skalenparameter $\sigma$ bestimmt wird,

Erzeugen eines 3D-Volumens (50e, 54) mit einer Vielzahl von 3D-Subvolumina aus den segmentierten Blobs und Zuordnen einer anatomischen Komponente zu jedem der 3D-Subvolumina unter Verwendung der anatomischen Wissensdaten in Bezug auf den Abschnitt der Körperstruktur der Bilddaten (60) und Identifizieren von durch die Subvolumina definierten Knochen.

2. Computerimplementiertes Verfahren nach Anspruch 1, wobei die lokale Nachbarschaft kreisförmig ist und das Durchführen der mehrphasigen, lokal basierten Hybrid-Level-Set-Segmentierung ferner umfasst: für jedes Pixel der 2D-Bilder dynamisches Ändern von Gebietsdeskriptoren basierend auf einer Position eines Zentrums der lokalen Nachbarschaft.

3. Computerimplementiertes Verfahren nach einem der Ansprüche 1 und 2, wobei die 2D-Bilder zwei Phasen beinhalten und das Energiefunktional lautet:

$$\mathcal{F}_{2\text{-phase}}(\phi, c, b) = (1 - \lambda)\mathcal{E}_{region}(\phi, c, b) + \lambda\mathcal{E}_{edge}(\phi) + \mu\mathcal{R}_p(\phi)$$

wobei $\lambda$ größer oder gleich 0 und kleiner oder gleich 1 ist, $\mu$ eine positive Konstante ist, $b$ ein Vorspannungsfeld ist, das die Intensitätsinhomogenität berücksichtigt, $\Phi$ ein Vektor ist, der aus zwei Level-Set-Funktionen $\Phi_i$, i = 1, 2 für die beiden Phasen gebildet wird, und $c$ ein Vektor ist, der die intensitätsbasierten Konstantenwerte in disjunkten Gebieten darstellt,

$$\mathcal{E}_{edge}(\phi) = v\mathcal{L}_g(\phi) + \alpha\mathcal{A}_g(\phi)$$

wobei $v$ und $\alpha$ Normierungskonstanten sind,

$$\mathcal{L}_g(\phi) \triangleq \int g_{\sigma,\tau}\, \delta_\varepsilon(\phi)|\nabla\phi|dx \quad ,$$

$$\mathcal{A}_g(\phi) \triangleq \int g_{\sigma,\tau}\, \mathcal{H}_\varepsilon(-\phi)dx \quad ,$$

$$g_{\sigma,\tau} \triangleq \frac{1}{1+f_{\sigma,\tau}} \quad ,$$

$$f_{\sigma,\tau}(x) = \int K_\sigma(y-x)u_\tau(y)dy \quad ,$$

$$u_\tau \triangleq |\nabla G_\tau * I|^2$$

wobei $G_\tau$ ein Gaußscher Kernel mit einer Standarddefinition $\tau$ ist und I das Bild ist, $K_\sigma$ eine Kernelfunktion ist, die mittels einer abgeschnittenen Gaußschen Funktion des Skalenparameters ($\sigma$) berechnet wird, wobei $\rho$ der Radius der lokalen kreisförmigen Nachbarschaft ist:

$$K_\sigma(u) = \begin{cases} \frac{1}{a}e^{-|u|^2/2\sigma^2}, & |u| \le \rho \\ 0, & sonst \end{cases}$$

und

$$H_\varepsilon(\phi) = \frac{1}{2}\left[1 + \frac{2}{\pi}\arctan\left(\frac{\phi}{\varepsilon}\right)\right]$$

wobei $\varepsilon$ ein Parameter ist und

$$\mathcal{E}_{region}(\phi, c, b) = \int \left(\sum_{i=1}^{N}\left(\int K_\sigma(y-x)|I(x)-b(y)c_i|^2dy\right)\mathcal{M}_i(\phi(x))\right)dx$$

$\mathcal{M}_i$ eine Mitgliederfunktion jeder Region $\Omega_i$, ist und definiert ist als:

$$\mathcal{M}_1(\phi) = \mathcal{H}_\varepsilon(\phi)$$

$$\mathcal{M}_2(\phi) = 1 - \mathcal{H}_\varepsilon(\phi)$$

wobei $\mathcal{R}_p$ ein Regularisierungsterm ist:

$$\mathcal{R}_p(\phi) = \int p(|\nabla\phi|)dx$$

und die Minimierung des hybriden Energiefunktionals $\mathcal{F}$ durch ein Gradientenabsenkungsverfahren erfolgt:

$$\frac{\partial\phi}{\partial t} = -\frac{\partial F_{2\_phase}}{\partial\phi}$$

4.  Computerimplementiertes Verfahren nach einem der Ansprüche 1 und 2, wobei das Energiefunktional lautet:

$$\mathcal{F}_{multiphase}(\Phi, c, b) = (1 - \lambda)\mathcal{E}_{region}(\Phi, c, b) + \lambda\mathcal{E}_{edge}(\Phi) + \mu\mathcal{R}_p(\Phi)$$

wobei $\lambda$ größer oder gleich 0 und kleiner oder gleich 1 ist, $\mu$ eine positive Konstante ist, $b$ ein Vorspannungsfeld ist, das die Intensitätsinhomogenität berücksichtigt, $c$ ein Vektor ist, der intensitätsbasierte Konstantenwerte in disjunkten Gebieten darstellt, und $\Phi$ ein Vektor ist, der aus k Level-Set-Funktionen $\Phi_i$, i = 1, ..., k für k Gebiete oder Phasen gebildet wird,

$$\Phi = (\phi_1(y), \dots, \phi_k(y))$$

und eine Anzahl der zu verwendenden Level-Set-Funktionen mindestens gleich

$$k = log_2(\mathcal{N})$$

ist, wobei $log_2$ der Logarithmus zur Basis 2 und N die Anzahl der zu segmentierenden Gebiete im Bild ist,

$$\mathcal{E}_{region}(\Phi, c, b) = \int \sum_{i=1}^N e_i(x)M_i(\Phi)x))dx$$

mit:

$$e_i(x) = \int K_\sigma |I(x) - b(y)c_i|^2 \, dy, \quad i=1, \dots, k$$

wobei $K_\sigma$ eine Kernelfunktion ist, die mittels einer abgeschnittenen Gaußschen Funktion der Standardabweichung $\sigma$, Skalenparameter genannt, berechnet wird, wobei

$\mathcal{M}_i$ eine Mitgliederfunktion jeder Region $\Omega_i$, und ist definiert als:

$$M_i(\boldsymbol{\Phi}) = M_i(\phi_1(\mathbf{y}), \ldots, \phi_k(\mathbf{y})) = \begin{cases} 1, & \mathbf{y} \in \Omega_i \\ 0, & \text{sonst} \end{cases}$$

$$\mathcal{E}_{edge}(\boldsymbol{\Phi}) = v\mathcal{L}_g(\boldsymbol{\Phi}) + \alpha\mathcal{A}_g(\boldsymbol{\Phi})$$

wobei:

$$\mathcal{L}_g(\boldsymbol{\Phi}) = \sum_{j=1}^{k} \mathcal{L}_g(\phi_j)$$

$$\mathcal{A}_g(\boldsymbol{\Phi}) = \sum_{j=1}^{k} \mathcal{A}_g(\phi_j)$$

wobei $v$ und $\alpha$ Normierungskonstanten sind und wobei

$\mathcal{L}_g(\phi_j)$ und $\mathcal{A}_g(\phi_j)$ neue lokal basierte Kantenterme sind:

$$\mathcal{L}_g(\phi) \triangleq \int g_{\sigma,\tau}\, \delta_\varepsilon(\phi)|\nabla\phi|d\mathbf{x}$$

$$\mathcal{A}_g(\phi) \triangleq \int g_{\sigma,\tau}\, \mathcal{H}_\varepsilon(-\phi)d\mathbf{x}$$

$$g_{\sigma,\tau} \triangleq \frac{1}{1+f_{\sigma,\tau}}$$

$$f_{\sigma,\tau}(\mathbf{x}) = \int K_\sigma(\mathbf{y}-\mathbf{x})u_\tau(\mathbf{y})d\mathbf{y}$$

$$u_\tau \triangleq |\nabla G_\tau * I|^2$$

wobei $G_\tau$ ein Gaußscher Kernel mit einer Standarddefinition $\tau$ ist und $I$ das Bild ist und $K\sigma$ eine Kernelfunktion ist, die mittels einer abgeschnittenen Gaußschen Funktion des Skalenparameters ($\sigma$) berechnet wird, wobei $\rho$ der Radius der lokalen kreisförmigen Nachbarschaft ist:

$$K_\sigma(u) = \begin{cases} \dfrac{1}{a}e^{-|u|^2/2\sigma^2}, & |u| \le \rho \\ 0, & \text{sonst} \end{cases}$$

und

$$H_\varepsilon(\phi) = \frac{1}{2}\left[1 + \frac{2}{\pi}\arctan\left(\frac{\phi}{\varepsilon}\right)\right]$$

wobei $\varepsilon$ ein Parameter ist,

wobei $\mathcal{R}_p$ ein Regularisierungsterm ist:

$$\mathcal{R}_p(\phi) = \int p(|\nabla \phi|)\, d\boldsymbol{x}$$

und wobei die Minimierung des mehrphasigen hybriden Energiefunktionals $\mathcal{F}_{multiphase}$ durch Gradientenabsenkungsverfahren lautet:

$$\frac{\partial \Phi_1 / \partial t}{\partial t} = -\frac{\partial \mathcal{F}_{multiphase}(\Phi)}{\partial \Phi_1}, \quad ..., \quad \frac{\partial \Phi_k / \partial t}{\partial t} = -\frac{\partial \mathcal{F}_{multiphase}(\Phi)}{\partial \Phi_k}.$$

5. Computerimplementiertes Verfahren nach einem der Ansprüche 1 bis 4, wobei die Körperstruktur eine Vielzahl von Knochen beinhaltet und das Verfahren unter Verwendung anatomischer Wissensdaten mit Bezug auf den Körperabschnitt der Körperstruktur der Bilddaten durchgeführt wird, wobei das Verfahren ferner umfasst:

Erzeugen von primären Bilddaten aus den Bilddaten unter Verwendung einer Bildvorverarbeitung, die das Identifizieren von Gebieten von Interesse ROIs in den 2D-Bildern (20) beinhaltet, und wobei das Durchführen der mehrphasigen, lokal basierten Hybrid-Level-Set-Segmentierung an mindestens einer Teilmenge der Vielzahl von 2D-Bildern das Durchführen der mehrphasigen, lokal basierten Hybrid-Level-Set-Segmentierung an den Gebieten von Interesse ROIs und das Erzeugen sekundärer segmentierter Bilddaten einschließlich einer Vielzahl von 2D-Binärbildern mit segmentierten Blobs, umfasst.

6. Computerimplementiertes Verfahren nach Anspruch 5, wobei die Vielzahl von 2D-Bildern Graustufenbilder sind und die Bildvorverarbeitung ferner das Durchführen einer 3D-adaptiven Schwellenwertverarbeitung (22) zum Definieren von schwellenwertbegrenzten Blobs in den 2D-Bildern und das Erzeugen von Binärmasken aus den schwellenwertbegrenzten Blobs, die durch die 3D-adaptive Schwellenwertverarbeitung erhalten werden, umfasst, wobei die 3D-adaptive Schwellenwertverarbeitung die folgenden Schritte umfasst: für mindestens eine Probe der Vielzahl von 2D-Graustufenbildern:

Unterteilen jedes der 2D-Graustufenbilder zumindest der Probe in eine Vielzahl von Abschnitten (22a), Berechnen eines lokalen Pixelintensitätsabschnittsschwellenwerts für jeden der Abschnitte (22b), Berechnen eines globalen Bildpixelintensitätsschwellenwerts für jedes der 2D-Graustufenbilder mindestens der Probe unter Verwendung der für jeden der Abschnitte (22d) berechneten lokalen Pixelintensitätsabschnittsschwellenwerte, Berechnen eines globalen Volumen-Pixelintensitätsschwellenwerts unter Verwendung der globalen Bildpixelintensitätsschwellenwerte und Anwenden des globalen Volumen-Pixelintensitätsschwellenwerts auf jedes der 2D-Graustufenbilder der Vielzahl von 2D-Graustufenbildern (22e).

7. Computerimplementiertes Verfahren nach Anspruch 6, wobei der globale Bildpixelintensitätsschwellenwert für jedes der 2D-Graustufenbilder zumindest der Probe als Maximum der lokalen Pixelintensitätsabschnittsschwellenwerte für das entsprechende Bild berechnet wird und der globale Volumen-Pixelintensitätsschwellenwert aus den globalen Bildpixelintensitätsschwellenwerten als Mittelwert der globalen Bildpixelintensitätsschwellenwerte minus 1,5 mal eine Standardabweichung der globalen Bildpixelintensitätsschwellenwerte berechnet wird.

8. Computerimplementiertes Verfahren nach einem der Ansprüche 6 und 7, wobei die Bildvorverarbeitung das Berechnen von schwellenwertbegrenzten Blobs in den Bildern nach der 3D-adaptiven Schwellenwertverarbeitung und das Erzeugen von Binärmasken aus den schwellenwertbegrenzten Blobs umfasst und wobei das Identifizieren von Gebieten von Interesse ROIs in den 2D-Bildern das Auswählen von Gebieten in den 2D-Graustufenbildern der Bilddaten umfasst, die mindestens einen der jeweiligen der schwellenwertbegrenzten Blobs und eine entsprechende der aus den schwellenwertbegrenzten Blobs erzeugten Binärmasken beinhalten.

9. Computerimplementiertes Verfahren nach Anspruch 8, wobei das Erzeugen sekundärer segmentierter Bilddaten das Durchführen einer Blobmaskierungsvalidierung (50c) nach der mehrphasigen, lokal basierten Hybrid-Level-Set-Segmentierung umfasst, wobei die mehrphasige, lokal basierte Hybrid-Level-Set-Segmentierung eine Vielzahl von unmaskierten Blobs erzeugt und wobei die Blobmaskierungsvalidierung umfasst:

Anwenden der binären Masken auf die unmaskierten Blobs, um maskierte Blobs zu erhalten,

Bestimmen mindestens eines wahrnehmbaren Gruppierungsmerkmals jedes der maskierten und der unmaskierten Blobs,

für jedes entsprechende Paar von maskierten und unmaskierten Blobs:

Vergleichen des mindestens einen wahrnehmbaren Gruppierungsmerkmals des maskierten Blobs mit dem mindestens einen wahrnehmbaren Gruppierungsmerkmal des entsprechenden der unmaskierten Blobs und Auswählen des einen des maskierten Blobs und des entsprechenden des unmaskierten Blobs, der das höchste wahrnehmbare Gruppierungsmerkmal hat, als segmentierter Blob der sekundären segmentierten Bilddaten.

10. Computerimplementiertes Verfahren nach einem der Ansprüche 8 und 9, ferner umfassend das Initialisieren der mehrphasigen, lokal basierten Hybrid-Level-Set-Segmentierung mit den binären Masken, wobei das Durchführen der mehrphasigen, lokal basierten Hybrid-Level-Set-Segmentierung an den Gebieten von Interesse ROIs das Erzeugen von binären Subbildern, die die segmentierten Blobs umfassen, und wobei das Verfahren ferner das Zusammenführen der binären Subbilder umfasst, um jeweils ein entsprechendes der 2D-Binärbilder, die die segmentierten Blobs enthalten, zu erzeugen.

11. Computerimplementiertes Verfahren nach einem der Ansprüche 5 bis 10, wobei die Bildvorverarbeitung ferner umfasst:

Bestimmen eines Anfangsbildes, das mindestens ein Gebiet von Interesse beinhaltet, und Bestimmen eines Endbildes, das mindestens ein Gebiet von Interesse beinhaltet, und

Auswählen einer Teilmenge von 2D-Bildern, die das Anfangsbild, das Endbild und die dazwischenliegenden Bilder umfasst, wobei die primären Bilddaten aus der Teilmenge von 2D-Bildern, die die Gebiete von Interesse ROIs enthalten, bestehen.

12. Computerimplementiertes Verfahren nach einem der Ansprüche 5 bis 11, wobei das Identifizieren von anatomischen Komponenten in dem 3D-Volumen umfasst:

Berechnen von mindestens einem Subvolumenmerkmal für jedes der 3D-Subvolumina,

Durchführen einer Knochenidentifikationsverarbeitung für jedes der 3D-Subvolumina, umfassend:

Identifizieren eines nächstgelegenen der Knochen und Vergleichen des mindestens einen Subvolumenmerkmals mit Merkmalen der anatomischen Wissensdaten, die dem nächstgelegenen der Knochen entsprechen,

wenn das mindestens eine Subvolumenmerkmal für das jeweilige der 3D-Subvolumina im Wesentlichen den Merkmalen der anatomischen Wissensdaten für den nächstgelegenen der Knochen entspricht, Zuordnen des jeweiligen der 3D-Subvolumina zu dem nächstgelegenen der Knochen,

andernfalls Anwenden einer selektiven 3D-Knochentrennung auf das jeweilige der 3D-Subvolumina und Erzeugen neuer 3D-Subvolumina.

13. Computerimplementiertes Verfahren nach Anspruch 12, wobei das Identifizieren von anatomischen Komponenten in dem 3D-Volumen ferner umfasst:

Identifizieren eines anatomischen 3D-Punktes von Interesse innerhalb des 3D-Volumens,

Identifizieren eines 3D-Subvolumens, das dem anatomischen 3D-Punkt von Interesse am nächsten liegt, und sequenzielles Durchführen der Knochenidentifikationsverarbeitung durch Nähe zu einem letzten der zugehörigen 3D-Subvolumina, beginnend mit dem 3D-Subvolumen, das dem anatomischen 3D-Punkt von Interesse am nächsten liegt.

14. Computerimplementiertes Verfahren nach einem der Ansprüche 12 und 13, wobei das aus den 2D-Binärbildern der sekundären segmentierten Bilddaten erzeugte 3D-Volumen ein erstes 3D-Volumen ist und das Verfahren ferner umfasst:

Durchführen einer 2D-Blobtrennung auf den sekundären segmentierten Bilddaten und Erzeugen eines zweiten 3D-Volumens durch Stapeln von binären Bildern, die nach der 2D-Blobtrennung erhalten wurden, und

wobei das Identifizieren anatomischer Komponenten auf dem zweiten 3D-Volumen durchgeführt wird und

wobei das Durchführen einer 2D-Blobtrennung umfasst:
für jeden der segmentierten Blobs der sekundären segmentierten Bilddaten:

> Erzeugen glatter Segmente aus den Konturen des jeweiligen der segmentierten Blobs,
> Identifizieren von Punkten von Interesse anhand der glatten Segmente,
> wenn es mindestens einen Punkt von Interesse gibt, Identifizieren mindestens einer Knochenbefestigungsstelle in der Nähe des mindestens einen Punktes von Interesse und Trennen des entsprechenden der segmentierten Blobs durch lokale morphologische Erosion entlang der mindestens einen Knochenbefestigungsstelle.

**15.** Computerimplementiertes Verfahren nach Anspruch 14, wobei das Identifizieren von Punkten von Interesse unter Verwendung der geraden Segmente umfasst:

> Bestimmen einer Länge der glatten Segmente und eines Winkels zwischen aufeinanderfolgenden der glatten Segmente, wobei zwei aufeinanderfolgenden glatten Segmente einen gemeinsamen Punkt teilt.
> für jedes Paar aufeinanderfolgender glatter Segmente $s_1$, $s_2$ Berechnen eines Relevanzmaßes($K_{relevance}$) berechnet:

$$K_{relevance} = \frac{\beta(s_1, s_2)l(s_1)l(s_2)}{l(s_1)+l(s_2)}$$

> wobei $\beta(s_1, s_2)$ der Winkel zwischen den aufeinanderfolgenden geraden Segmenten $s_1$ und $s_2$ ist und $l(s1)$ und $l(s2)$ Längen der aufeinanderfolgenden geraden Segmente $s_1$ und $s_2$ sind,
> Vergleichen des berechneten Relevanzmaßes mit einem vorgegebenen Schwellenwert und,
> wenn das berechnete Relevanzmaß den vorgegebenen Relevanzschwellenwert erreicht, Identifizieren des gemeinsamen Punkts als einen Punkt von Interesse.

**16.** Computerimplementiertes Verfahren nach Anspruch 15, wobei das Identifizieren mindestens einer Knochenbefestigungsstelle nahe dem mindestens einen Punkt von Interesse umfasst:

> Identifizieren, ob ein jeweiliger der Punkte von Interesse zu einer linearen Knochenbefestigungsstelle gehört, die durch ein Paar von Punkten von Interesse definiert ist, und wobei Trennen des entsprechenden der segmentierten Blobs für jede identifizierte lineare Knochenbefestigungsstelle das Durchführen einer linearen lokalen morphologischen Erosion entlang einer Linie, die sich zwischen den Punkten von Interesse erstreckt, die die lineare Knochenbefestigungsstelle definieren, umfasst,
> ansonsten Identifizieren des jeweiligen der Punkte von Interesse als punktuelle Knochenbefestigungsstelle, wobei das Trennen des jeweiligen der segmentierten Blobs das Durchführen einer lokalen morphologischen Erosion um die punktuelle Knochenbefestigungsstelle herum umfasst und
> wobei das Identifizieren eines Paares von Punkten von Interesse umfasst:

> > für jedes potenzielle Paar von Punkten von Interesse, Gruppieren der Punkte von Interesse in einem Paar und Berechnen eines Abstands, der zwei gruppierte Punkte des Paares trennt,
> > Vergleichen des berechneten Abstands mit einem vorbestimmten Abstandsschwellenwert und
> > wenn der berechnete Abstand den vorbestimmten Abstandsschwellenwert erreicht, Zuordnen des potenziellen Paares von Punkten von Interesse als eine lineare Knochenbefestigungsstelle.

**17.** System zum Erzeugen einer Segmentierungsdatensegmentierung aus Bilddaten von mindestens einem Abschnitt einer Körperstruktur mit einer Vielzahl von Knochen unter Verwendung anatomischer Wissensdaten relativ zu dem Abschnitt der Körperstruktur der Bilddaten, wobei das System umfasst:

> eine Verarbeitungseinheit mit einem Prozessor und einem Speicher,
> ein Bildvorverarbeitungsmodul, das im Speicher gespeichert und vom Prozessor ausführbar ist, wobei das Bildvorverarbeitungsmodul einen Programmcode aufweist, der, wenn er ausgeführt wird, primäre Bilddaten aus den Bilddaten unter Verwendung eines Bildvorverarbeitungsprozesses erzeugt, wobei die primären Bilddaten Gebiete von Interesse in Bildern der Bilddaten beinhalten,
> ein Mehrknochen-Segmentierungsmodul, das auf dem Speicher gespeichert und vom Prozessor ausführbar ist, wobei das Mehrknochen-Segmentierungsmodul einen Programmcode aufweist, wenn er ausgeführt wird, ein 3D-Volumen erzeugt, indem er eine mehrphasige, lokal basierte Hybrid-Level-Set-Segmentierung durchführt, um eine Vielzahl von segmentierten Blobs zu erhalten, und die segmentierten Blobs kombiniert, um das 3D-Volumen einschließlich einer Vielzahl von 3D-Subvolumina zu erhalten, wobei die mehrphasige, lokal basierte Hybrid-Level-Set-Segmentierung auf jedem der Gebiete von Interesse ROIs durchgeführt wird, indem ein Energiefunktional minimiert wird, das einen lokal basierten Kantenterm und einen lokal basierten Gebietsterm beinhaltet, die lokal innerhalb einer lokalen Nachbarschaft berechnet werden, die an jedem Punkt eines jeweiligen der Gebiete von Interesse ROIs zentriert ist, wobei die lokale Nachbarschaft durch einen Gaußschen Kernel definiert wird, dessen Größe durch einen Skalenparameter $\sigma$ bestimmt wird, und ein 3D-Volumen nach der mehrphasigen, lokal basierten Hybrid-Level-Set-Segmentierung erzeugt wird, und
ein anatomisches Komponentenidentifikationsmodul, das im Speicher gespeichert und vom Prozessor ausführbar ist, wobei das anatomische Komponentenidentifikationsmodul einen Programmcode aufweist, der, wenn er ausgeführt wird, tertiär segmentierte Bilddaten durch Identifizieren der im 3D-Volumen definierten Subvolumina und Identifizieren der durch die Subvolumina definierten Knochen erzeugt.

## Revendications

1. Procédé mis en œuvre par ordinateur permettant de réaliser une segmentation d'os dans des données d'imagerie d'une section d'une structure corporelle, le procédé comprenant :

l'obtention des données d'imagerie (12) comportant une pluralité d'images en 2D de la section de la structure corporelle ;
la réalisation d'une segmentation locale d'ensemble de niveaux hybride (50) pour obtenir une pluralité de taches segmentées sur au moins un sous-ensemble de la pluralité d'images en 2D en minimisant une fonctionnelle énergétique comportant un terme de bord local et un terme de région locale calculés localement dans un voisinage local centré à chaque pixel de chacune des images en 2D sur lesquelles est réalisée la segmentation locale d'ensemble de niveaux hybride, le voisinage local étant défini par un noyau gaussien dont la taille est déterminée par un paramètre d'échelle $\sigma$ ;
la génération d'un volume en 3D (50e, 54) comportant une pluralité de sous-volumes en 3D à partir des taches segmentées ; et
l'association d'un composant anatomique à chacun des sous-volumes en 3D en utilisant des données de connaissances anatomiques relatives à la section de la structure corporelle des données d'imagerie (60) et l'identification des os définis par les sous-volumes.

2. Procédé mis en œuvre par ordinateur de la revendication 1, dans lequel le voisinage local est circulaire et réalise la segmentation locale d'ensemble de niveaux hybride, comprenant en outre : pour chaque pixel des images en 2D, la modification dynamique de descripteurs de région sur la base d'une position d'un centre du voisinage local.

3. Procédé mis en œuvre par ordinateur de l'une des revendications 1 et 2, dans lequel les images en 2D comportent deux phases et la fonctionnelle énergétique est :

$$\mathcal{F}_{2\text{-phase}}(\phi, c, b) = (1 - \lambda)\mathcal{E}_{region}(\phi, c, b) + \lambda\mathcal{E}_{edge}(\phi) + \mu\mathcal{R}_p(\phi)$$

où $\lambda$ est supérieure ou égale à 0 et inférieure ou égale à 1, $\mu$ est une constante positive, $b$ est un champ de polarisation comptant pour l'inhomogénéité d'intensité, $\Phi$ est un vecteur formé par deux fonctions d'ensemble de niveaux $\Phi_i$, i = 1, 2 pour les deux phases, et $c$ est un vecteur représentant des valeurs constantes basées sur l'intensité dans des régions disjointes,

$$\mathcal{E}_{edge}(\phi) = \nu\mathcal{L}_g(\phi) + \alpha\mathcal{A}_g(\phi)$$

dans lesquelles $\nu$ et $\alpha$ sont des constantes de normalisation,

$$\mathcal{L}_g(\phi) \triangleq \int g_{\sigma,\tau} \, \delta_\varepsilon(\phi) |\nabla \phi| d\mathbf{x} \quad ,$$

$$\mathcal{A}_g(\phi) \triangleq \int g_{\sigma,\tau} \, \mathcal{H}_\varepsilon(-\phi) d\mathbf{x} \quad ,$$

$$g_{\sigma,\tau} \triangleq \frac{1}{1+f_{\sigma,\tau}} ,$$

$$f_{\sigma,\tau}(\mathbf{x}) = \int K_\sigma(\mathbf{y}-\mathbf{x}) u_\tau(\mathbf{y}) d\mathbf{y} \quad ,$$

$$u_\tau \triangleq |\nabla G_\tau * I|^2$$

avec $G_\tau$ étant un noyau gaussien avec une définition standard $\tau$ et $I$ étant l'image,
$K_\sigma$ une fonction de noyau calculé au moyen d'une fonction gaussienne tronquée du paramètre d'échelle ($\sigma$), $\rho$ étant le rayon du voisinage circulaire local :

$$K_\sigma(u) = \begin{cases} \dfrac{1}{a} e^{-|u|^2/2\sigma^2}, & |u| \le \rho \\ 0, & otherwise \end{cases}$$

et

$$H_\varepsilon(\phi) = \frac{1}{2}\left[1 + \frac{2}{\pi} \arctan\left(\frac{\phi}{\varepsilon}\right)\right]$$

avec $\varepsilon$ étant un paramètre ; et

$$\mathcal{E}_{region}(\phi, c, b) = \int \left(\sum_{i=1}^{N} (\int K_\sigma(\mathbf{y}-\mathbf{x})|I(\mathbf{x})-b(\mathbf{y})c_i|^2 d\mathbf{y}) \mathcal{M}_i(\phi(\mathbf{x}))d\mathbf{x}\right.$$

$\mathcal{M}_i$ est une fonction d'appartenance de chaque région $\Omega_i$ et est définie en tant que :

$$\mathcal{M}_1(\phi) = \mathcal{H}_\varepsilon(\phi)$$

$$\mathcal{M}_2(\phi) = 1 - \mathcal{H}_\varepsilon(\phi)$$

dans laquelle $\mathcal{R}_p$ est un terme de régularisation :

$$\mathcal{R}_p(\phi) = \int p(|\nabla \phi|) dx$$

et la minimisation de la fonctionnelle énergétique hybride $\mathcal{F}$ est effectuée par un procédé de descente de gradient :

$$\frac{\partial \phi}{\partial t} = - \frac{\partial F_{2\_phase}}{\partial \phi}$$

4.  Procédé mis en œuvre par ordinateur de l'une des revendications 1 et 2, dans lequel la fonctionnelle énergétique est :

$$\mathcal{F}_{multiphase}(\Phi, c, b) = (1 - \lambda)\mathcal{E}_{region}(\Phi, c, b) + \lambda\mathcal{E}_{edge}(\Phi) + \mu\mathcal{R}_p(\Phi)$$

où $\lambda$ est supérieure ou égale à 0 et inférieure ou égale à 1, $\mu$ est une constante positive, b est un champ de polarisation comptant pour l'inhomogénéité d'intensité, c est un vecteur représentant des valeurs constantes basées sur l'intensité dans régions disjointes, et $\Phi$ est un vecteur formé par k fonctions d'ensemble de niveaux $\Phi i$, i = 1... k pour k régions ou phases ;

$$\Phi = (\phi_1(\mathbf{y}), \ldots, \phi_k(\mathbf{y}))$$

et un nombre des fonctions d'ensemble de niveaux à utiliser est au moins égal à :

$$k = log_2(\mathcal{N})$$

où $log_2$ est le logarithme de base 2 et N est le nombre des régions à segmenter dans l'image.

$$\mathcal{E}_{region}(\Phi, c, b) = \int \sum_{i=1}^{N} e_i(\mathbf{x}) M_i(\Phi) \mathbf{x})) d\mathbf{x}$$

avec

$$e_i(\mathbf{x}) = \int K_\sigma |I(\mathbf{x}) - b(\mathbf{y})c_i|^2 \, d\mathbf{y}, \quad i = 1, \ldots, k$$

avec $K_\sigma$ une fonction de noyau calculée au moyen d'une fonction gaussienne tronquée d'un écart standard $\sigma$, appelé le paramètre d'échelle,

$\mathcal{M}_i$ est une fonction d'appartenance de chaque région $\Omega$, et est définie en tant que :

$$M_i(\Phi) = M_i(\phi_1(\mathbf{y}), \ldots, \phi_k(\mathbf{y})) = \begin{cases} 1, & \mathbf{y} \in \Omega_i \\ 0, & else \end{cases}$$

$$\mathcal{E}_{edge}(\Phi) = v\mathcal{L}_g(\Phi) + \alpha\mathcal{A}_g(\Phi)$$

où :

$$\mathcal{L}_g(\Phi) = \sum_{j=1}^{k} \mathcal{L}_g(\phi_j)$$

$$\mathcal{A}_g(\Phi) = \sum_{j=1}^{k} \mathcal{A}_g(\phi_j)$$

dans laquelle $v$ et $\alpha$ sont des constantes de normalisation, avec $\mathcal{L}_g(\phi_j)$ et $\mathcal{A}_g(\phi_j)$ étant de nouveaux termes de bords locaux :

$$\mathcal{L}_g(\phi) \triangleq \int g_{\sigma,\tau}\, \delta_\varepsilon(\phi)|\nabla\phi|d\mathbf{x} \quad,$$

$$\mathcal{A}_g(\phi) \triangleq \int g_{\sigma,\tau}\, \mathcal{H}_\varepsilon(-\phi)d\mathbf{x} \quad,$$

$$g_{\sigma,\tau} \triangleq \frac{1}{1+f_{\sigma,\tau}}\,,$$

$$f_{\sigma,\tau}(\mathbf{x}) = \int K_\sigma(\mathbf{y}-\mathbf{x})u_\tau(\mathbf{y})d\mathbf{y} \quad,$$

$$u_\tau \triangleq |\nabla G_\tau * I|^2$$

avec G. étant un noyau gaussien avec une définition standard $\tau$ et $I$ étant l'image,
$K_\sigma$ une fonction de noyau calculée au moyen d'une fonction gaussienne tronquée du paramètre d'échelle ($\sigma$), $\rho$ étant le rayon du voisinage circulaire local :

$$K_\sigma(u) = \begin{cases} \dfrac{1}{a}e^{-|u|^2/2\sigma^2}, & |u| \le \rho \\ 0, & otherwise \end{cases}$$

et

$$H_\varepsilon(\phi) = \frac{1}{2}\left[1 + \frac{2}{\pi}\arctan\left(\frac{\phi}{\varepsilon}\right)\right]$$

avec $\varepsilon$ étant un paramètre,

dans lequel $\mathcal{R}_p$ est un terme de régularisation :

$$\mathcal{R}_p(\phi) = \int p(|\nabla\phi|)dx$$

et la minimisation de la multiphasique fonctionnelle énergétique hybride $\mathcal{F}_{multiphase}$ par un procédé de descente de gradient :

$$\frac{\partial\Phi_1/\partial t}{\partial t} = -\frac{\partial\mathcal{F}_{multiphase}(\Phi)}{\partial\Phi_1}, \dots, \frac{\partial\Phi_k/\partial t}{\partial t} = -\frac{\partial\mathcal{F}_{multiphase}(\Phi)}{\partial\Phi_k}.$$

**5.** Procédé mis en œuvre par ordinateur tel que revendiqué dans l'une quelconque des revendications 1 à 4, dans lequel la structure corporelle comporte une pluralité d'os et le procédé est réalisé en utilisant des données de connaissances anatomiques relatives à la section corporelle de la structure corporelle des données d'imagerie, le procédé comprenant en outre :

la génération de données d'image primaires à partir des données d'imagerie en utilisant un traitement d'image comportant l'identification de régions d'intérêt ROI dans les images en 2D (20) ; et

dans lequel la réalisation de la segmentation locale d'ensemble de niveaux hybride sur au moins un sous-ensemble de la pluralité d'images en 2D comprend la réalisation de la segmentation locale d'ensemble de niveaux hybride sur les régions d'intérêt ROI et la génération de données d'image segmentées secondaires comportant une pluralité d'images binaires en 2D avec des taches segmentées.

6. Procédé mis en œuvre par ordinateur de la revendication 5, dans lequel la pluralité d'images en 2D sont des images en niveaux de gris et le traitement d'image comprend en outre la réalisation d'un traitement de seuillage adaptatif en 3D (22) pour définir des taches seuillées dans les images en 2D et générer des masques binaires à partir des taches seuillées obtenues par le traitement de seuillage adaptatif en 3D, dans lequel le traitement de seuillage adaptatif en 3D comporte les étapes consistant à :
pour au moins un échantillon de la pluralité d'images en 2D en niveaux de gris :

diviser chacune des images en 2D en niveaux de gris dudit au moins un échantillon en une pluralité de sections (22a) ;
calculer un seuil de section d'intensité de pixels locaux pour chacune des sections (22b) ;
calculer un seuil d'intensité de pixels d'image globale pour chacune des images en 2D en niveaux de gris dudit au moins un échantillon en utilisant les seuils de section d'intensité de pixels locaux calculés pour chacune des sections (22d) ;
calculer un seuil d'intensité de pixels de volume global en utilisant les seuils d'intensité de pixels d'image globale ; et
appliquer le seuil d'intensité de pixels de volume global à chacune des images en 2D en niveaux de gris de la pluralité d'images en 2D en niveaux de gris (22e)

7. Procédé mis en œuvre par ordinateur de la revendication 6, dans lequel le seuil d'intensité de pixels d'image globale pour chacune des images en 2D en niveaux de gris dudit au moins un échantillon est calculé en tant que maximum des seuils de section d'intensité de pixels locaux pour l'image correspondante ; et le seuil d'intensité de pixels de volume global à partir des seuils d'intensité de pixels d'image globale est calculé en tant que moyenne des seuils d'intensité de pixels d'image globale moins 1,5 fois un écart standard des seuils d'intensité de pixels d'image globale.

8. Procédé mis en œuvre par ordinateur de l'une des revendications 6 et 7, dans lequel le traitement d'image comprend le calcul de taches seuillées dans les images suivant le traitement de seuillage adaptatif en 3D et la création de masques binaires à partir des taches seuillées ; et dans lequel l'identification des régions d'intérêt ROI dans les images en 2D comprend la sélection de régions dans les images en 2D en niveaux de gris des données d'imagerie comportant au moins l'un parmi celle respective des taches seuillées et celui respectif des masques binaires générés à partir des taches seuillées.

9. Procédé mis en œuvre par ordinateur de la revendication 8, dans lequel la génération de données d'image segmentées secondaires comprend la réalisation d'une validation de masquage de tache (50c) suivant la segmentation locale d'ensemble de niveaux hybride, la segmentation locale d'ensemble de niveaux hybride générant une pluralité de taches non masquées, et dans lequel la validation de masquage de tache comprend :

l'application des masques binaires aux taches non masquées pour obtenir des taches masquées ;
la détermination d'au moins une propriété de groupement perceptuel de chacune des taches masquées et des taches non masquées ;
pour chaque paire de taches masquées et de taches non masquées correspondante,
la comparaison de l'au moins une propriété de groupement perceptuel de la tache masquée à l'au moins une propriété de groupement perceptuel de celle correspondante des taches non masquées ; et
la sélection de l'une parmi la tache masquée et celle correspondante des taches non masquées ayant la propriété de groupement perceptuel la plus élevée en tant que tache segmentée des données d'image segmentées secondaires.

10. Procédé mis en oeuvre par ordinateur de l'une des revendications 8 et 9, comprenant en outre l'initialisation de la segmentation locale d'ensemble de niveaux hybride avec les masques binaires et dans lequel la réalisation de la segmentation locale d'ensemble de niveaux hybride sur les régions d'intérêt ROI comprend la génération de sous-images binaires comportant les taches segmentées et le procédé comprend en outre la fusion des sous-images binaires pour générer une image respective des images binaires en 2D comportant les taches segmentées.

11. Procédé mis en œuvre par ordinateur de l'une quelconque des revendications 5 à 10, dans lequel le traitement d'image comprend en outre :

la détermination d'une image initiale comportant au moins une région d'intérêt et la détermination d'une image finale comportant au moins une région d'intérêt ; et
la sélection d'un sous-ensemble d'images en 2D comportant l'image initiale, l'image finale, et les images s'étendant entre celles-ci, dans lequel les données d'image primaires sont constituées du sous-ensemble d'images en 2D comportant les régions d'intérêt ROI.

12. Procédé mis en œuvre par ordinateur de l'une quelconque des revendications 5 à 11, dans lequel l'identification de composants anatomiques dans le volume en 3D comprend :

le calcul d'au moins une caractéristique de sous-volume pour chacun des sous-volumes en 3D ;
pour chacun des sous-volumes en 3D, le fait d'effectuer un traitement d'identification osseuse comprenant :

l'identification d'un os le plus proche des os et la comparaison de l'au moins une caractéristique de sous-volume à des caractéristiques des données de connaissances anatomiques correspondantes à celui le plus proche des os ;
si l'au moins une caractéristique de sous-volume pour celui respectif des sous-volumes en 3D correspond sensiblement aux caractéristiques des données de connaissances anatomiques pour celui le plus proche des os, l'association de celui respectif des sous-volumes en 3D à celui le plus proche des os ;
autrement, l'application d'une séparation sélective d'os en 3D à celui respectif des sous-volumes en 3D et la génération de nouveaux sous-volumes en 3D.

13. Procédé mis en œuvre par ordinateur de la revendication 12, dans lequel l'identification de composants anatomiques dans le volume en 3D comprend en outre :

l'identification d'un point anatomique d'intérêt en 3D à l'intérieur du volume en 3D ;
l'identification d'un sous-volume en 3D le plus proche du point anatomique d'intérêt en 3D ; et
la réalisation successive du traitement d'identification osseuse par proximité à un dernier volume des sous-volumes en 3D associés, en commençant par le sous-volume en 3D le plus proche du point anatomique d'intérêt en 3D.

14. Procédé mis en œuvre par ordinateur de l'une des revendications 12 et 13, dans lequel le volume en 3D généré à partir des images binaires en 2D des données d'image segmentées secondaires est un premier volume en 3D et le procédé comprend en outre :

le fait d'effectuer une séparation de tache en 2D sur les données d'image segmentées secondaires et la génération d'un second volume en 3D en empilant des images binaires obtenues suivant la séparation de tache en 2D ; et
dans lequel l'identification de composants anatomiques est réalisée sur le second volume en 3D ; et
dans lequel le fait d'effectuer une séparation de tache en 2D comprend :
pour chacune des taches segmentées des données d'image segmentées secondaires :

la création de segments droits à partir des contours de celle respective des taches segmentées ;
l'identification de points d'intérêt en utilisant les segments droits ;
s'il y a au moins un point d'intérêt, l'identification d'au moins un emplacement de fixation osseuse proche de l'au moins un point d'intérêt ; et la séparation de celle respective des taches segmentées par une érosion morphologique locale le long de l'au moins un emplacement de fixation osseuse .

15. Procédé mis en œuvre par ordinateur de la revendication 14 dans lequel l'identification de points d'intérêt en utilisant les segments droits comprend :

la détermination d'une longueur des segments droits et d'un angle entre des segments consécutifs des segments droits, deux segments droits consécutifs partageant un point commun ;

pour chaque paire de segments droits consécutifs $s_1$, $s_2$, le calcul d'une mesure de pertinence ($K_{relevance}$) :

$$K_{relevance} = \frac{\beta(s_1, s_2)l(s_1)l(s_2)}{l(s_1)+l(s_2)}$$

dans laquelle ($s_1$, $s_2$) est l'angle entre les segments droits consécutifs $s_1$ et $s_2$ ;

$l(s_1)$ et $l(s_2)$ sont des longueurs des segments droits consécutifs $s_1$ et $s_2$ respectivement ;

la comparaison de la mesure de pertinence calculée à un seuil prédéterminé ; et

si la mesure de pertinence calculée atteint le seuil de pertinence prédéterminé, l'identification du point commun comme étant un point d'intérêt.

16. Procédé mis en œuvre par ordinateur de la revendication 15 dans lequel l'identification d'au moins un emplacement de fixation osseuse proche de l'au moins un point d'intérêt comprend :

le fait d'identifier si un point respectif des points d'intérêt appartient à un emplacement de fixation osseuse linéaire défini par une paire de points d'intérêt ; et, pour chaque emplacement de fixation osseuse linéaire identifié, la séparation de celle respective des taches segmentées comprend la réalisation d'une érosion morphologique locale linéaire le long d'une ligne s'étendant entre les points d'intérêt définissant l'emplacement de fixation osseuse linéaire ;

autrement, l'identification de celui respectif des points d'intérêt en tant qu'un emplacement de fixation osseuse ponctuel et la séparation de celle respective des taches segmentées comprend la réalisation de d'une érosion morphologique locale autour de l'emplacement de fixation osseuse ponctuel ; et

dans lequel l'identification d'une paire de points d'intérêt comprend : pour chaque paire potentielle de points d'intérêt, le regroupement des points d'intérêt en une paire et le calcul d'une distance séparant deux points regroupés de la paire, la comparaison de la distance calculée à un seuil de distance prédéterminé ; et si la distance calculée atteint le seuil de distance prédéterminé, l'association de la paire potentielle de points d'intérêt comme étant un emplacement de fixation osseuse linéaire.

17. Système de génération d'une segmentation de données de segmentation à partir de données d'imagerie d'au moins une section d'une structure corporelle comportant une pluralité d'os en utilisant des données de connaissances anatomiques relatives à la section de la structure corporelle des données d'imagerie, le système comprenant :

une unité de traitement ayant un processeur et une mémoire ;

un module de traitement d'image stocké sur la mémoire et exécutable par le processeur, le module de traitement d'image ayant un code de programme qui, lorsqu'il est exécuté, génère des données d'image primaires à partir des données d'imagerie en utilisant un processus de traitement d'image, les données d'image primaires comportant des régions d'intérêt dans des images des données d'imagerie ;

un module de segmentation de plusieurs os stocké sur la mémoire et exécutable par le processeur, le module de segmentation de plusieurs os ayant un code de programme qui, lorsqu'il est exécuté, génère un volume en 3D en réalisant une segmentation locale d'ensemble de niveaux hybride pour obtenir une pluralité de taches segmentées et en combinant les taches segmentées pour obtenir le volume en 3D comportant une pluralité de sous-volumes en 3D, la segmentation locale d'ensemble de niveaux hybride étant effectuée sur chacune des régions d'intérêt ROI en minimisant une fonctionnelle énergétique comportant un terme de bord local et un terme de région local calculés localement dans un voisinage local centré à chaque point d'une région respective des régions d'intérêt ROI, le voisinage local étant défini par un noyau gaussien dont la taille est déterminée par un paramètre d'échelle $\sigma$ et générant un volume en 3D suivant la segmentation locale d'ensemble de niveaux hybride ; et

un module d'identification de composant anatomique stocké sur la mémoire et exécutable par le processeur, la module d'identification de composant anatomique ayant un code de programme qui, lorsqu'il est exécuté, génère des données tertiaires segmentées d'imagerie par l'identification des sous-volumes définis dans le volume en 3D et l'identification d'os définis par les sous-volumes.

~10

| Acquiring imaging data of an anatomical region including a plurality of bones | ~12 |

| Preprocessing images of the imaging data | ~20 |

| Multi-bone segmentation | ~50 |

| Identification of anatomical components | ~60 |

FIG. 1

| 3D adaptive thresholding processing | ~22 |
| Identifying regions of interest (ROI) | ~24 |
| Selecting a subset of images including ROIs | ~25 |
| Filtering processing | ~26 |

~20

## FIG. 2A

EP 3 188 127 B1

```
┌─────────────────────────────────────────────────┐
│  ┌───────────────────────────────────────────┐   │
│  │       Dividing each greyscale image        │───┤─22a
│  │         of a sample in sections            │   │
│  └───────────────────────────────────────────┘   │
│22─┤                                               │
│  ┌───────────────────────────────────────────┐   │
│  │ Determining a pixel intensity section      │───┤─22b
│  │ threshold for each section of the images   │   │
│  │ of the sample                              │   │
│  └───────────────────────────────────────────┘   │
│  ┌───────────────────────────────────────────┐   │
│  │ Determining pixel intensity image          │───┤─22c
│  │ thresholds using the pixel intensity       │   │
│  │ section thresholds                         │   │
│  └───────────────────────────────────────────┘   │
│  ┌───────────────────────────────────────────┐   │
│  │ Defining a global pixel intensity          │───┤─22d
│  │ threshold using the pixel intensity        │   │
│  │ image thresholds                           │   │
│  └───────────────────────────────────────────┘   │
│  ┌───────────────────────────────────────────┐   │
│  │ Applying the global pixel intensity        │───┤─22e
│  │ threshold to each image of the imaging data│   │
│  └───────────────────────────────────────────┘   │
│  ┌───────────────────────────────────────────┐   │
│  │        Generating binary images            │───┤─22f
│  └───────────────────────────────────────────┘   │
└─────────────────────────────────────────────────┘
```

FIG. 2B

FIG. 3A

FIG. 3B

FIG. 4A

FIG. 4B

FIG. 5A

FIG. 5B

FIG. 5C

FIG. 6

Determining perceptual grouping properties
of masked blobs & unmasked blobs

Does the
masked blob have
higher perceptual
grouping properties than the
corresponding
unmasked
blob ?

No

Yes

— 52

Use the unmasked
(original) blob

Use the masked
blobs

FIG. 6A

FIG. 7A

FIG. 7B

FIG. 7C

FIG. 7D

FIG. 7E

FIG. 8A

FIG. 8B

FIG. 8C

**FIG. 9**

FIG. 10A

FIG. 10B

FIG. 10C

FIG. 10D

FIG. 11

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 2014086465 A, Wu Dijia
- US 2008317308 A, Wu Xiadong

- WO 2013166592 A

### Non-patent literature cited in the description

- **MESEJO et al.** Biomedical image segmentation using geometric deformable models and metaheuristics. *Computerized medical imaging and graphics,* July 2015, vol. 43, 167-178
- **C. LI ; C. KAO ; J. GORE ; Z. DING.** Minimization of Region-Scalable Fitting Energy for Image Segmentation. *IEEE Trans Image Process.,* October 2008, vol. 17 (10), 1940-1949
- **D. MUMFORD ; J. SHAH.** Optimal Approximations by Piecewise Smooth Functions and Associated Variational Problems. *Communications on Pure and Applied Mathematics,* 1989, vol. XLII (5), 577-685

- **C. LI ; R. HUANG ; Z. DING ; C. GATENBY ; D. N. METAXAS ; J. C. GORE.** A Level Set Method for Image Segmentation in the Presence of Intensity Inhomogeneities with Application to MRI. *IEEE Trans. Image Processing,* 2011, vol. 20 (7), 2007-2016
- **C. LI ; C. XU ; C. GUI ; M. D. FOX.** Distance Regularized Level Set Evolution and its Application to Image Segmentation. *IEEE Trans. Image Processing,* 2010, vol. 19 (12), 3243-3254
- **L. J. LATECKI ; R. LAKÄMPER.** Convexity Rule for Shape Decomposition Based on Discrete Contour Evolution. *Computer Vision and Image Understanding (CVIU),* 1999, vol. 73, 441-454